# EUROPEAN PATENT APPLICATION

(11) **EP 3 197 126 A1**
(43) Date of publication of application: **26.07.2017**
(21) Application number: 17155211.0
(22) Date of filing: 30.08.2010
(51) Int. Cl.: H04L 29/06, H04L 9/32, H04L 9/08, H04N 21/258, H04N 21/6334

(54) **CONDITIONAL ACCESS CONTROL COMMUNICATION SYSTEM, CONDITIONAL CONTROL ACCESS COMMUNICATION APPARATUS, CONDITIONAL ACCESS CONTROL COMMUNICATION METHOD, AND COMPUTER PROGRAM**

(30) Priority: 09.09.2009 JP 2009208687; 21.05.2010 JP 2010117832
(62) Divisional of application: 10815121.8
(71) Applicant: Sony Corporation, Tokyo 108-0075 (JP)
(72) Inventor: NAKANO, Takehiko, Minato-ku, Tokyo 1080075 (JP)
(74) Representative: D Young & Co LLP

(57) **Abstract**

A source apparatus (10) and a conditional access apparatus (20) are disclosed. The source apparatus (10) may transmit a command to the conditional access apparatus (20). The conditional access apparatus (20) may transmit a response to the command to the source apparatus (10) . When a time elapsed between transmission of the command by the source apparatus (10) and reception of the response by the source apparatus (10) does not exceed a predetermined round trip time (RTT), a first authorization signal to permit the conditional access apparatus (20) to decrypt encrypted content may be generated. Additionally, whenever a non-RTT condition is met, a second authorization signal to permit the conditional access apparatus (20) to decrypt the content may be generated.

## Description

The present invention relates to a communication system, a communication apparatus, a communication method, and a computer program for preventing an illegal use in a content transmission, more particularly, to a communication system, a communication apparatus, a communication method, and a computer program for exchanging a decryption key for an encrypted content in accordance with a predetermined mutual authentication and key exchange (AKE: Authentication and Key Exchange) algorithm as well as transmit the encrypted content. More specifically, the present invention relates to a communication system for safely transmitting a content via a remote access (RA) that uses an external network such as a WAN, and a communication apparatus, a communication method, and a computer program for safely transmitting a content via a remote access while exceeding limits on a round-trip time (RTT), a hop count of an IP (Internet Protocol) router, and the like, more particularly, to a communication system, a communication apparatus, a communication method, and a computer program.

From the past, broadcast contents and contents in package media have been basically used at a location where a reception apparatus or a reproduction apparatus is installed or in an apparatus connected to those apparatuses via a home network (hereinafter, also referred to as "local access (LA)"). For example, it has been difficult to connect to the reception apparatus or the reproduction apparatus from outside using a portable apparatus and use a content transmitted via an external network such as a WAN (Wide Area Network) (hereinafter, also referred to as "remote access (RA)") from a technical viewpoint of a communication path, a codec, and the like. However, it is expected that in the future, a data communication technique such as LTE (Long Term Evolution) and WiMAX (World Interoperability for Microwave Access) and a high-compression codec such as H.264 will prevail. Thus, there is a possibility that the remote access will be realized by using those techniques. For example, a user may remotely access a home server from outside and reproduce a content.

On the other hand, a digitized content is relatively-easily manipulated as in copying, falsifications, and the like. Above all, in the remote access, there is a need for a mechanism for preventing an illegal use that occurs in a content transmission, that is, for a copyright protection while permitting an individual or domestic use of a content.

As an industrially-standard technique regarding a transmission protection of digital contents, there is a DTCP (Digital Transmission Content Protection) developed by DTLA (Digital Transmission Licensing Administrator). In DTCP, an inter-apparatus authentication protocol used in a content transmission and a transmission protocol of an encrypted content are arranged. In short, it is regulated that a DTCP-compliant apparatus does not transmit an easily-handled compressed content to an external apparatus in an unencrypted state, an exchange key necessary for decrypting an encrypted content is generated in accordance with a predetermined mutual authentication and key exchange (AKE) algorithm, a range of apparatuses to exchange keys based on an AKE command is limited, and the like. A server as a content provider (source) and a client as a content provision destination (sink) share a key via an authentication processing by exchanging an AKE command and thus perform a content transmission by encrypting a transmission path using that key. Therefore, since an unauthorized client is unable to obtain an encryption key unless succeeding in the authentication with the server, the unauthorized client cannot enjoy the content.

DTCP originally regulates a content transmission in a home network that uses, for example, IEEE1394 as a transmission path. Recently, a movement that attempts to also domestically circulate digitized AV contents via an IP network as represented by DLNA (Digital Living Network Alliance) is moving into full swing. In this regard, for an attempt to also domestically circulate digital contents via the IP network, a DTCP technique that supports the IP network, that is, a DTCP-IP (DTCP mapping to IP) is being developed.

The DTCP-IP is a similar technique in which the DTCP technique is transplanted to the IP network. The DTCP-IP uses the IP network as the transmission path and uses a content transmission protocol implemented on the IP network, such as HTTP (Hyper Text Transfer Protocol) and RTP (Real-Time Transfer Protocol), for transmitting an encrypted content. When transmitting a content in accordance with an HTTP processing, for example, a download transmission of an encrypted content is carried out by creating a TCP/IP connection for HTTP with the source being an HTTP server and the sink being an HTTP client (provided that, when performing upload transmission, source becomes HTTP client and sink becomes HTTP server). The current DTCP-IP (DTCP Volume 1 Specification Supplement E Revision 1.2) mainly intends to secure only a domestic use of contents. Therefore, a round-trip time (RTT: Round Trip Time) is limited to 7 milliseconds at maximum with respect to an AKE command, and an upper limit of a hop count (TTL: Time To Live) of an IP router is set to 3.

For example, there is proposed an information communication system that continues monitoring each of the received AKE commands and continues updating a maximum value of a TTL value until right before the source ends a DTCP-IP authentication since starting it, checks the maximum value of the TTL value right before the authentication processing ends, exchanges a key and ends the authentication processing when the maximum value is 3 or less, and ends the authentication processing without carrying out processing of a final stage when the maximum value exceeds 3 (see, for example, Japanese Patent Application Laid-open No. 2007-36351). However, when limits on the RTT and TTL are imposed, it is difficult to access a copyright-protected content in a server of a domestic home network from a remote location outside a home.

Although it is desirable to permit a remote access with respect to a content considering user-friendliness, it contradicts an advantage of a content owner who wishes to protect copyrights.

### [Citation List]

### [Patent Literature]

[PTL 1] Japanese Patent Application Laid-open No. 2007-36351

### [Summary of Invention]

### [Technical Problem]

In view of the circumstances as described above, there is a need for an excellent communication system, communication apparatus, communication method, and computer program that are capable of favorably preventing an illegal use in a content transmission by exchanging a decryption key for an encrypted content in accordance with a predetermined mutual authentication and key exchange (AKE) algorithm.

There is also a need for an excellent communication system, communication apparatus, communication method, and computer program that are capable of safely transmitting a content via a remote access that uses an external network such as a WAN while exceeding limits of a round-trip time (RTT), a hop count (TTL) of an IP router, and the like.

### [Solution to Problem]

Accordingly, there is disclosed a conditional access apparatus for selectively generating a signal to permit decryption of encrypted content. The conditional access apparatus may include first and second authorization sections. The first authorization section may be configured to receive a command transmitted by a source apparatus, and transmit to the source apparatus a response to the command. The first authorization section may also be configured to, upon receipt of an indication signal indicating that a time elapsed between transmission of the command by the source apparatus and reception of the response by the source apparatus does not exceed a predetermined round trip time (RTT), generate a first authorization signal to permit decryption of the content. The second authorization section may be configured to, whenever a non-RTT condition is met, generate a second authorization signal to permit decryption of the content.

There is also disclosed a source apparatus for selectively generating a signal to permit a conditional access apparatus to decrypt encrypted content. The source apparatus may include first and second authorization sections. The first authorization section may be configured to transmit a command to the conditional access apparatus, and receive from the conditional access apparatus a response to the command. The first authorization section may also be configured to, when a time elapsed between transmission of the command and reception of the response does not exceed a predetermined round trip time (RTT), generate a first authorization signal to permit the conditional access apparatus to decrypt the content. The second authorization section may be configured to, whenever a non-RTT condition is met, generate a second authorization signal to permit the conditional access apparatus to decrypt the content. Additionally, there is disclosed a method for selectively generating a signal with a conditional access apparatus to permit decryption of encrypted content. A processor may execute a program to cause the conditional access apparatus to perform the method. The program may be stored on a memory of the conditional access apparatus or on another computer-readable storage medium. The method may include receiving a command transmitted by a source apparatus, and transmitting to the source apparatus a response to the command. The method may also include, upon receipt of an indication signal indicating that a time elapsed between transmission of the command by the source apparatus and reception of the response by the source apparatus does not exceed a predetermined round trip time (RTT), generating a first authorization signal to permit decryption of the content. Additionally, the method may include, whenever a non-RTT condition is met, generating a second authorization signal to permit decryption of the content.

There is also disclosed a method for selectively generating a signal with a source apparatus to permit a conditional access apparatus to decrypt encrypted content. A processor may execute a program to cause the source apparatus to perform the method. The program may be stored on a memory of the source apparatus or on another computer-readable storage medium. The method may include transmitting a command to the conditional access apparatus, and receiving from the conditional access apparatus a response to the command. The method may also include, when a time elapsed between transmission of the command and reception of the response does not exceed a predetermined round trip time (RTT), generating a first authorization signal to permit the conditional access apparatus to decrypt the content. Additionally, the method may include, whenever a non-RTT condition is met, generating a second authorization signal to permit the conditional access apparatus to decrypt the content.

It should be noted that the "system" used herein refers to a system in which a plurality of apparatuses (or function modules that realize specific functions) are logically assembled, and whether the apparatuses or function modules exist in a single casing is not particularly relevant. These and other objects, features and advantages of the present invention will become more apparent in light of the following detailed description of best mode embodiments thereof, as illustrated in the accompanying drawings.

### [Brief Description of Drawings]

[Fig. 1] Fig. 1 is a diagram schematically showing a structural example of a communication system according to an embodiment of the present invention.
[Fig. 2] Fig. 2 is a diagram schematically showing another structural example of the communication system according to the embodiment of the present invention.
[Fig. 3] Fig. 3 is a diagram schematically showing a functional structure of a content provision apparatus.
[Fig. 4] Fig. 4 is a diagram schematically showing a functional structure of a content utilization apparatus.
[Fig. 5] Fig. 5 is a diagram for explaining a mechanism for performing an encrypted content transmission between a source and a sink by a DTCP-IP.
[Fig. 6] Fig. 6 is a diagram showing an operational sequence of a mutual authentication and key exchange that uses an AKE command, that is carried out between the source and the sink in accordance with a current DTCP-IP.
[Fig. 7] Fig. 7 is a diagram showing an example of an authentication sequence in registering an RA-Sink in an RA-source.
[Fig. 8] Fig. 8 is a flowchart showing a procedure of "RA-Sink Registration" processing for the RA-Source to register the RA-sink.
[Fig. 9] Fig. 9 is a diagram showing an example of an authentication sequence at a time the RA-Source supplies a remote access exchange key to the RA-Sink.
[Fig. 10] Fig. 10 is a flowchart showing a procedure of "RA-Sink ID Confirmation" processing for the RA-Source to confirm a registration of the RA-Sink and the number of remote access exchange keys to be supplied.
[Fig. 11] Fig. 11 is a diagram schematically showing an example of a system structure in which the RA-Source and the RA-Sink are additionally connected to another apparatus in a daisy chain mode and may additionally output a received content.
[Fig. 12] Fig. 12 is a diagram schematically showing an example of a system structure in which the RA-Source and the RA-Sink are additionally connected to another apparatus in the daisy chain mode and may additionally output a received content.
[Fig. 13] Fig. 13 is a diagram schematically showing an example of a system structure in which the RA-Source and the RA-Sink are additionally connected to another apparatus in the daisy chain mode and may additionally output a received content.
[Fig. 14] Fig. 14 is a diagram showing an example of an authentication sequence at a time a Source#0 shares a key with only a Sink#1 by performing a DEP-RA-AKE.
[Fig. 15] Fig. 15 is a flowchart showing a procedure of "DEP_RA-Sink Confirmation" processing for the source to authenticate the sink for a substitution of a remote access output.
[Fig. 16] Fig. 16 is a diagram showing an operational sequence at a time the RA-Sink requests a content from the RA-Source in a case where the number of RA-Sinks to transmit the same content at the same time is limited.
[Fig. 17] Fig. 17 is a flowchart showing a processing procedure that is executed by the RA-Source in response to a request of content data, for managing the number of outputs of the same content.
[Fig. 18] Fig. 18 is a flowchart showing a processing procedure for an apparatus operating as the RA-Source to record a content or take in the content by a MOVE function.
[Fig. 19] Fig. 19 is a diagram showing an operational sequence for the RA-Sink to request a content from the RA-Source.
[Fig. 20] Fig. 20 is a flowchart showing a processing procedure of a content remote access (RA) output count management 1.
[Fig. 21] Fig. 21 is a diagram showing an operational sequence for the sink to request a content to substitute the remote access from the source.
[Fig. 22] Fig. 22 is a flowchart showing a processing procedure of a content remote access output substitution management.
[Fig. 23] Fig. 23 is a diagram for explaining an example of a method of preventing a falsification of an RA-flag, more specifically, a diagram showing a method of inputting a value of the RA-flag to a function for calculating an encryption key and reflecting it on a value of an encryption key K_{c}.
[Fig. 24] Fig. 24 is a diagram for explaining an example of the method of preventing a falsification of an RA-flag, more specifically, a diagram showing a method of processing an encryption key and information including the RA-flag to be transmitted in a plain text by a hash function and obtaining signature data.
[Fig. 25] Fig. 25 is a diagram for explaining an example of the method of preventing a falsification of an RA-flag, more specifically, a diagram showing a storage destination in encrypting the RA-flag together with content data.
[Fig. 26] Fig. 26 is a diagram for explaining an example of the method of preventing a falsification of an RA-flag, more specifically, a diagram showing a storage destination in encrypting the RA-flag together with content data.
[Fig. 27] Fig. 27 is a flowchart showing a processing procedure for the RA-Source to update the RA-flag and T that are set for a content.
[Fig. 28] Fig. 28 is a diagram showing a structural example of an AKE control command for a remote access.
[Fig. 29] Fig. 29 is a diagram showing a structural example of a personal computer to be applied to the content provision apparatus.
[Fig. 30] Fig. 30 is a diagram showing a structural example of a recorder to be applied to the content provision apparatus.

### [Description of Embodiments]

The present invention relates to a communication system for safely transmitting a content via a remote access (RA) that uses an external network such as a WAN. This communication system is basically constituted of a server that provides contents by a remote access (RA-Source) and a client that requests contents by the remote access (RA-Sink). In the specification, an AKE processing that is carried out at a time of the remote access will be referred to as "RA-AKE". Hereinafter, an embodiment of the present invention will be described specifically with reference to the drawings.

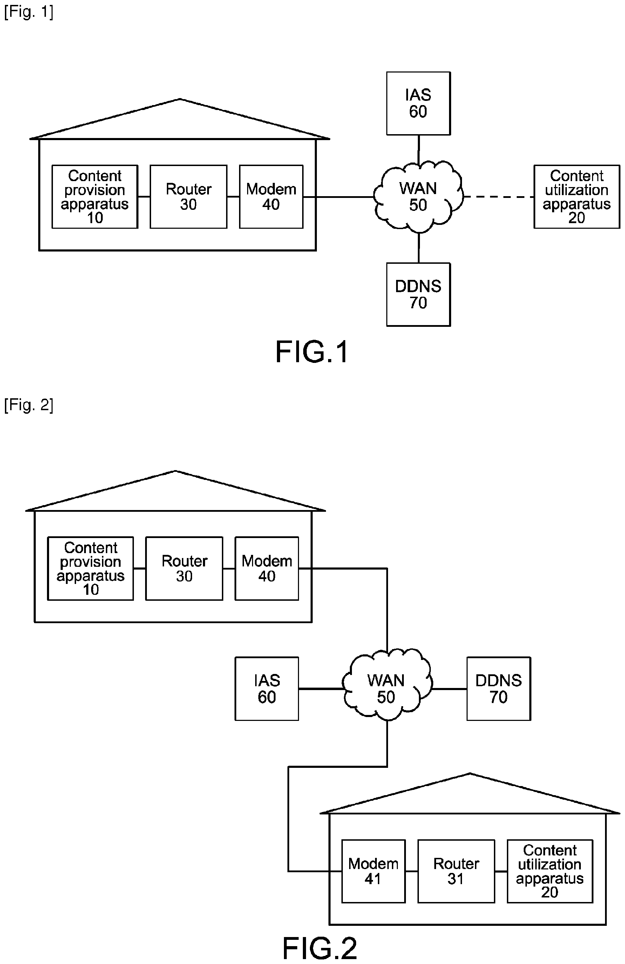

Fig. 1 schematically shows a structural example of the communication system according to an embodiment of the present invention. In the communication system shown in the figure, a source apparatus (e.g., a content provision apparatus 10) corresponding to the RA-Source is provided inside a home, and a conditional access apparatus (e.g., a content utilization apparatus 20) corresponding to the RA-Sink is provided outside. The content utilization apparatus 20 remotely accesses the content provision apparatus 10 using a communication function like a cellular phone.

The content provision apparatus 10 is connected to an external network such as a WAN 50 via a generally-used router 30 and modem 40. The WAN 50 is, for example, the Internet. An IP address on the WAN 50 side is allocated to the router 30 from an Internet Access Service (IAS) provider 60 that a user signs up for. The content utilization apparatus 20 also accesses this IP address in principle. The router 30 allocates a private IP address to the content provision apparatus 10 and relays communication by port forwarding regarding an access through the WAN 50. It should be noted that the IP address allocated to the router 30 may be updated by the IAS provider 60. In such a case, a DDNS (Dynamic DNS (Domain Name System)) function of the router 30 or the content provision apparatus 10 may be used using a DDNS service 70. Fig. 2 schematically shows another structural example of the communication system according to the embodiment of the present invention. In the communication system shown in the figure, the content utilization apparatus 20 corresponding to the RA-Sink is also provided inside a home and connected to the WAN 50 via a router 31 and a modem 41. TCP/IP (Transmission Control Protocol/Internet Protocol) communication sent out from the content utilization apparatus 20 is address-converted by a NAT (Network Address Translation) function of the router 31, but other than that is the same as in the case of Fig. 1.

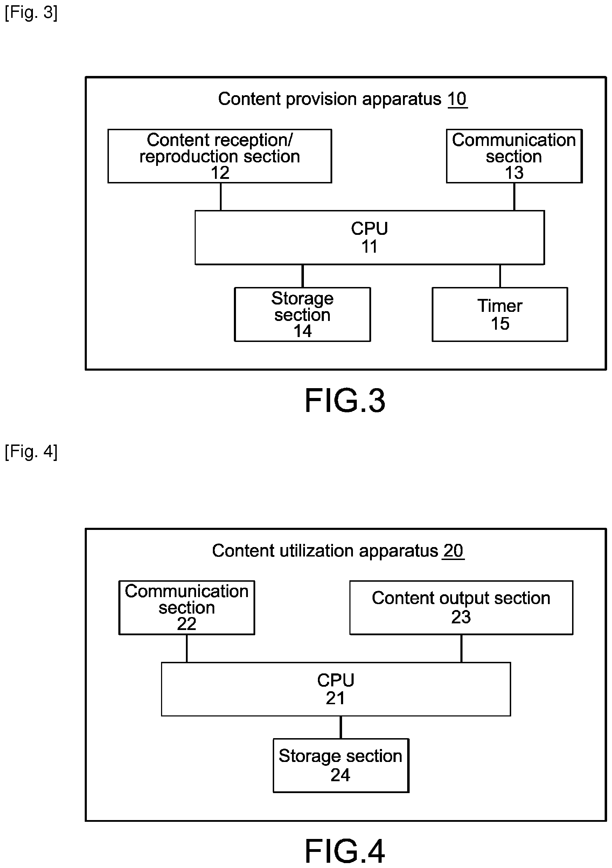

Fig. 3 schematically shows a functional structure of the content provision apparatus 10. The content provision apparatus 10 includes a CPU (Central Processing Unit) 11, a content reception/reproduction section 12, a communication section 13, a storage section 14, and a timer 15 and functions as the RA-Source to transmit contents by a remote access.

The content reception/reproduction section 12 has a broadcast reception function and a package media reproduction function. The CPU 11 appropriately protects a remotely-accessible content obtained by the content reception/reproduction section 12 and transmits it to the RA-Sink (content utilization apparatus 20) that has undergone a mutual authentication and key exchange by the RA-AKE via the communication section 13 after that.

The storage section 14 stores identification information of the RA-Sink that has become necessary to be stored by registration processing to be described later, a remote access exchange key shared with the RA-Sink via the RA-AKE, identification information on the exchange key, and the like. Moreover, the storage section 14 can also be used to store contents obtained by the content reception/reproduction section 12.

The timer 15 is used when a time management is required in handling remotely-accessible contents (e.g., when managing period from time at reference time point to remote access unavailable time limit as will be described later).

Fig. 4 schematically shows a functional structure of the content utilization apparatus 20. The content utilization apparatus 20 includes a CPU 21, a communication section 22, a content output section 23, and a storage section 24 and functions as the RA-Sink to receive contents by the remote access.

In addition to apparatus registration processing to be described later with respect to the RA-Source (content provision apparatus 10) via the communication section 22, the content utilization apparatus 20 as the RA-Sink obtains an exchange key from the RA-Source by performing the RA-AKE and stores it in the storage section 24, decrypts an encrypted content obtained from the RA-Source using an encryption key calculated based on the obtained key, and outputs the content from the content output section 23. The storage section 24 is used for storing an exchange key and content received from the RA-Source.

In descriptions below, a method of calculating an encryption key from an exchange key is based on a DTCP-IP (provided that the gist of the present invention is not necessarily limited to this method).

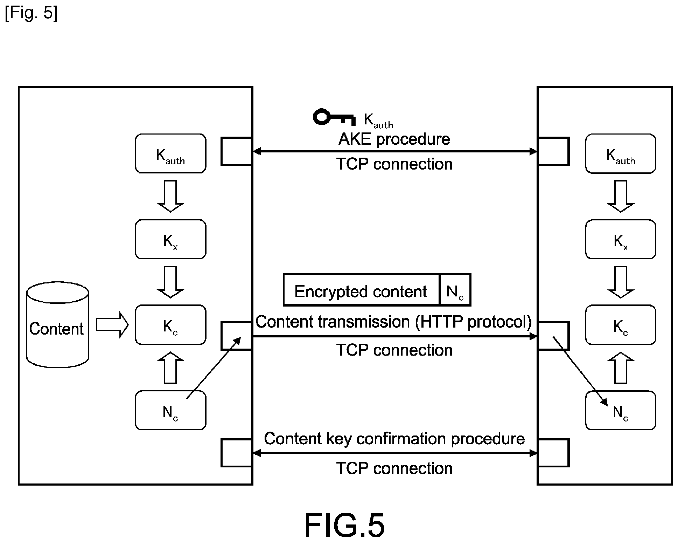

Here, a mechanism for performing an encrypted content transmission between the source and the sink by the DTCP-IP will be described with reference to Fig. 5. As a content transmission method, there are a method of copying a content in the source to the sink and a method of completely moving the content from the source to the sink without leaving the content in the source (well-known). Descriptions on Fig. 5 will be given based on the presupposition that the former method of copying a content is used as the content transmission method.

The source and the sink first establish one TCP/IP connection and perform an inter-apparatus authentication (AKE processing). An apparatus certificate issued by the DTLA (described above) is embedded in a DTCP-compliant apparatus. In the AKE processing, the source and the sink can share an authentication key Kₐᵤₜₕ after mutually confirming that they are qualified DTCP-compliant apparatuses.

Upon succeeding in the AKE processing, the source (e.g., an authorization section of the source) generates authorization signals. For example, the source generates an exchange key Kₓ to be a base of a content key K_{c} and transmits it to the sink after encrypting it with the authentication key Kₐᵤₜₕ. By applying predetermined operational processing to the exchange key Kₓ in each of the source and the sink, the content key K_{c} to be used for encrypting a content at a time of a content transmission can be generated.

Then, after the authentication and key exchange processing by the AKE between the DTCP-compliant apparatuses, a content transmission is started using a protocol such as HTTP and RTP. In the example shown in Fig. 5, the content transmission is performed in accordance with the HTTP processing. At this time, a TCT/IP connection for HTTP is created in addition to the TCT/IP connection for the AKE processing (i.e., each of the source and the sink has individual socket information for an AKE processing and a content transmission (combination of IP address and port number)).

For performing a content transmission based on the HTTP protocol, there are two methods including a download method in which the sink requests a content from the source and an upload method in which the source side pushes a content to the sink. In the former method, an HTTP client as the sink requests a content from an HTTP server as the source based on an HTTP request that uses, for example, an HTTP GET method, and the source transmits the requested content as an HTTP response. In the latter method, the HTTP client as the source starts a transmission with the HTTP server as the sink in response to an HTTP request that uses, for example, an HTTP POST method.

Data transmitted from the source is data obtained by the source encrypting a content using the shared key after performing the AKE authentication. Specifically, the source generates a nonce N_{c} using random numbers and generates a content key K_{c} corresponding to the exchange key Kₓ, the nonce N_{c}, and the encryption mode. Then, the source encrypts a content requested by the sink using the content key K_{c} and transmits a packet constituted of a payload including the encrypted content and a header including information on the nonce N_{c} and the encryption mode by a TCP stream. In the IP protocol, a TCP stream is divided into sizes of a packet as a predetermined unit, and each of the packets obtained by the division is appended with a header portion to become an IP packet which is sent to a designated IP address.

Upon receiving each IP packet from the source, the sink side assembles them into a TCP stream. Then, the sink (e.g., an authorization section of the sink) generates authorization signals to permit decryption of the encrypted content. For example, the sink extracts the nonce N_{c} and an E-EMI from the stream, and calculates the content key K_{c} using the nonce N_{c}, the E-EMI, and the exchange key Kₓ. The encrypted content can then be decrypted using the content key K_{c}. Further, reproduction processing can be carried out on the decrypted plain-text content. Alternatively, the sink stores the content in the storage section 24 without decrypting the encrypted content or transmits it to another apparatus. Upon ending the content transmission that uses the HTTP protocol as described above, the TCP connection used in the content transmission is cut off as appropriate from the sink side, for example (in the DTCP-IP, a transmission of copy control information accompanying a content is realized by two mechanisms of an E-EMI (Extended Encryption Mode Indicator) described in a header portion of a packet and Embedded CCI (Copy Control Information)).

It should be noted that it is defined in the DTCP-IP that the exchange key is to be discarded before a continuous unused time exceeds a predetermined time period (e.g., 2 hours). It becomes impossible for the sink to use an encrypted content unless a latest exchange key Kₓ is obtained from the source. Moreover, as an operation method of the exchange key Kₓ, there are a method of preparing one key for each sink and a method of using one key irrespective of the number of sinks.

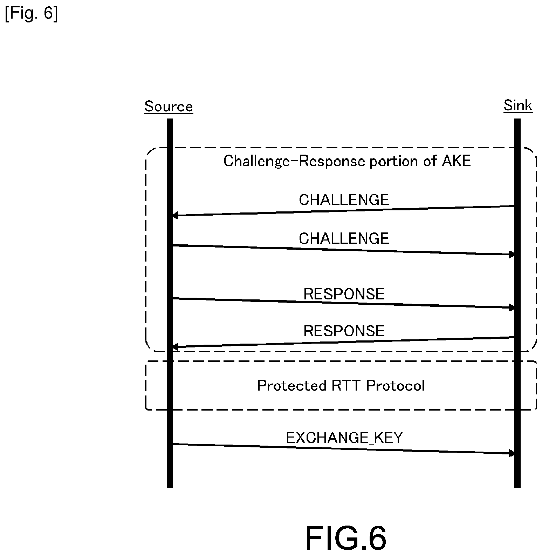

Fig. 6 shows an operational sequence of a mutual authentication and key exchange that uses an AKE command (RTT-AKE), that is carried out between the source and the sink in accordance with a current DTCP-IP. For example, the mutual authentication and key exchange is carried out between a first authorization section of the source and a first authorization section of the sink.

In a challenge-response portion of the AKE processing (Challenge-Response portion of AKE), a command (e.g., an Rx challenge including Rx random numbers and an Rx certificate) is first transmitted from the sink requesting a content. In response to the Rx challenge, another command (e.g., a Tx challenge including Tx random numbers and a Tx certificate) is sent back from the source. After that, a normal challenge-response authentication processing continues in which an Rx response including the Rx random numbers, a Tx message, and a Tx signature is transmitted from the source, whereas a Tx response including the Tx random numbers, an Rx message, and an Rx signature is transmitted from the sink. Each challenge command transmitted in the challenge-response portion includes a Device ID as identification information unique to an apparatus.

In the challenge-response authentication processing described above, a limit on a TTL (hop count of IP router) is imposed. Specifically, in the current DTCP-IP, a TTL of a transmission apparatus is set to be 3 or less in the TCP/IP communication that transmits a command used in the AKE, and a reception apparatus needs to invalidate received data when the TTL is larger than 3.

After that, an EXCHANGE_KEY command is transmitted from the source to the sink via Protected RTT Protocol, and a response (not shown) is sent back from the sink in response to the command.

In the RTT-AKE according to the current DTCP-IP shown in Fig. 6, a round-trip time (RTT) and the hop count of the IP router (TTL) are limited with respect to the AKE command, and the RTT-AKE cannot be applied to the remote access as it is (as described above). However, considering user-friendliness, it is desirable for the user to remotely access a home server from outside and reproduce a content. It is of course necessary to secure an advantage of a content owner who wishes to protect copyrights. Therefore, the remote access needs to be limited within a content range that the content owner allows, and contents to be remotely accessed also need to be protected.

On the other hand, in the AKE processing at a time of the remote access, that is, the RA-AKE proposed as the present invention, the "Protected RTT Protocol" performed in the RTT-AKE processing shown in Fig. 6 is not performed. Specifically, the AKE processing carried out between, for example, a second authorization section of the source and a second authorization section of the sink is not canceled even when the RTT between the source and the sink exceeds 7 milliseconds. Moreover, in the RA-AKE, an upper limit of the TTL is not set. Specifically, by not imposing the limits on the RTT and TTL in the RA-AKE, even when the source that supports the remote access (content provision apparatus 10) and the sink that supports the remote access (content utilization apparatus 20) are apart by a distance with which a response delay time exceeds 7 milliseconds and the hop count exceeds 3, the AKE processing can be performed successfully between the apparatuses, and a remote access exchange key can thus be shared.

It should be noted that since a content transmission between arbitrary apparatuses becomes possible in the communication system in which the limits on the RTT and TTL are not imposed, a mechanism for preventing an illegal use becomes necessary from the viewpoint of a copyright protection of contents.

As one of illegal uses that occur due to the fact that the limits on the RTT and TTL are not imposed in the RA-AKE processing, it is possible that an unspecified number of users (i.e., range exceeding range of private use allowed by copyright law) will connect their RA-sinks to an RA-Source of a specific user and remotely use a content in that RA-Source. Therefore, connections from an unspecified number of users need to be limited.

For limiting the connections from an unspecified number of users, there are a method in which the RA-Source performs the RA-AKE processing with only the RA-Sink registered in advance and a method of limiting the number of RA-Sinks to supply a key in the RA-AKE processing. Regarding the advance registration in the former method, by the RA-Source storing an apparatus-specific ID of the RA-Sink only when the AKE processing in which the RTT and TTL are limited ends in success as in the RTT-AKE of the current DTCP-IP, a situation in which an unspecified number of users succeed in the RA-AKE processing can be prevented from occurring.

Moreover, by limiting the number of RA-Sinks to be registered in the RA-Source, a scale of an illegal use can be limited. In descriptions below, it is assumed that the RA-Source includes an "RA registry" (inside storage section 14) for registering IDs of a predetermined number of RA-Sinks. Here, by limiting the number of RA-Sinks to supply the remote access exchange key in the content transmission as will be described later even in a case where the apparatus-specific ID of the RA-Sink has been registered in the RA-Source, the scale of an illegal use can be limited.

The registration processing of the RA-Sink is carried out in advance at home where the RTT and TTL fall within the limit, for example. In this case, a registration section of the RA-Source may register as much as 10 RA-Sinks. Even when 10 RA-Sinks are registered in advance with respect to the RA-Source, the RA-Source supplies the remote access exchange key to only 5 RA-Sinks.

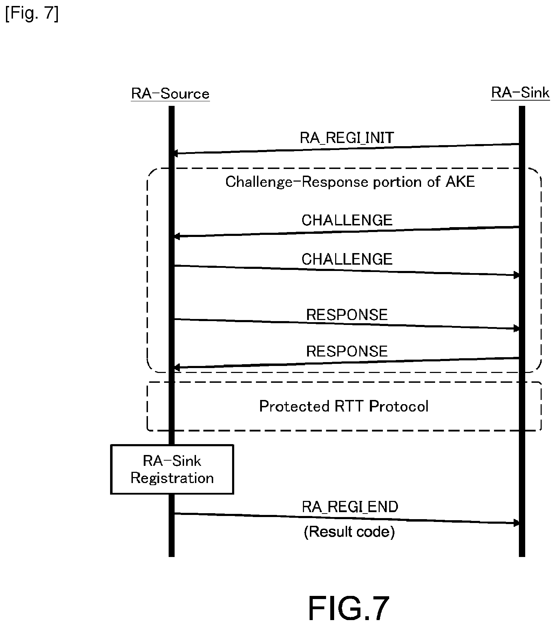

Fig. 7 shows an example of an authentication sequence in registering the RA-sink in the RA-source.

The authentication sequence is started by the registration section of the RA-Sink transmitting a registration request command "RA_REGI_INIT" to the RA-Source. In a challenge-response portion of the RA-AKE processing (Challenge-Response portion of AKE), a command (e.g., an Rx challenge including Rx random numbers and an Rx certificate) is first transmitted from the RA-Sink. In response to the challenge, another command (e.g., a Tx challenge including Tx random numbers and a Tx certificate) is sent back from the RA-Source. After that, an Rx response including the Rx random numbers, a Tx message, and a Tx signature is transmitted from the RA-Source, whereas a Tx response including the Tx random numbers, an Rx message, and an Rx signature is transmitted from the RA-Sink.

It should be noted that information corresponding to the transmission of "RA_REGI_INIT", such as "RA_REGI_INIT flag", may be incorporated into the information to be transmitted as an Rx challenge instead of transmitting "RA_REGI_INIT".

Each challenge command includes a Device ID that is identification information unique to an apparatus. It should be noted that in the challenge-response portion, "RESPONSE2" may be transmitted as a response from the sink to the source. In this case, the Device ID does not become specific to an apparatus due to a Common Device Key and a Common Device Certificate implemented in the apparatus. When RESPONSE2 is transmitted, an IDu that is apparatus-specific information included in RESPONSE2 is used as the apparatus-specific identification information instead of the Device ID.

The challenge-response portion of the RA-AKE processing in the registration processing is the same processing as in the RTT-AKE processing in the current DTCP-IP, which means that the limit on the TTL is imposed. After that, the Protected RTT Protocol follows, and the RA-AKE processing is canceled when the RTT between the RA-Source and the RA-Sink exceeds 7 milliseconds.

The RA-Source executes "RA-Sink Registration" processing for registering the RA-Sink that has succeeded in the processing up to that time point. Then, if there is room, the RA-Source additionally registers the ID of the RA-Sink in the RA registry in the storage section 14 and notifies the RA-Sink of the result using a command "RA_REGI_END" for transmitting a result code.

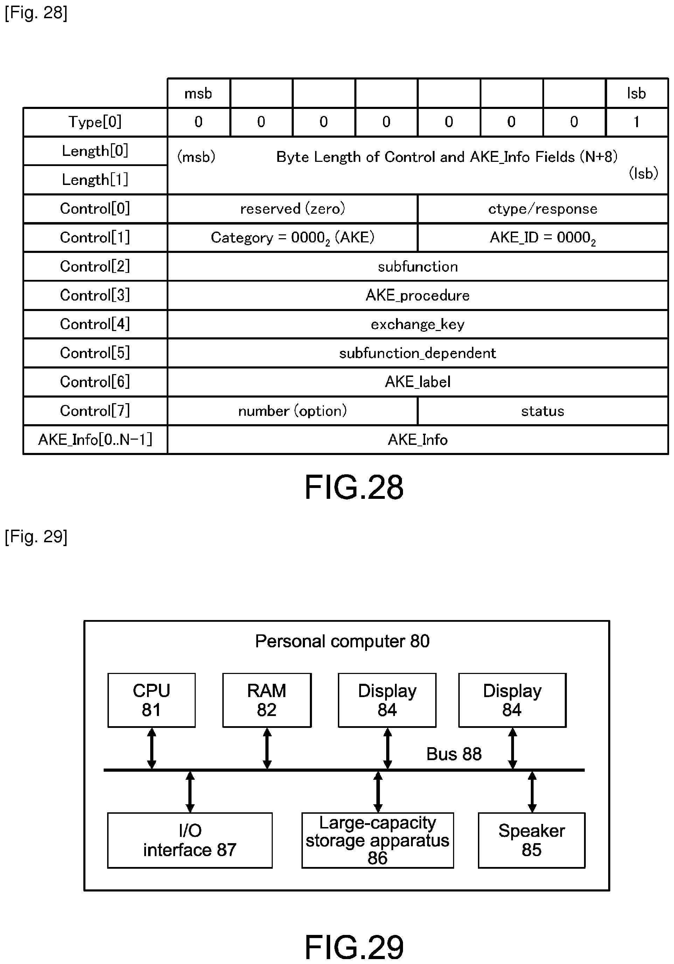

It should be noted that "RA_REGI_INIT" and "RA_REGI_END" in Fig. 7 are added to the AKE control command of the DTCP-IP as a remote access command. Fig. 28 shows a structural example of the AKE control command for a remote access. In the example shown in Fig. 28, a new value is allocated to a subfunction field, and information can be carried in AKE_Info.

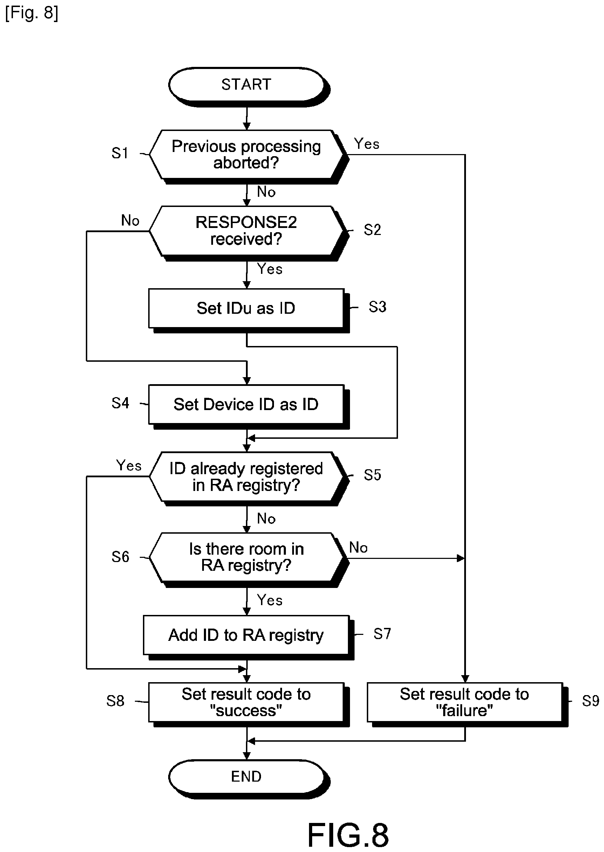

Fig. 8 shows a flowchart of a procedure of the "RA-Sink Registration" processing for the RA-Source to register the RA-sink.

The RA-Source first checks whether previous processing that has been carried out before the processing routine (Challenge-Response portion of AKE and Protected RTT Protocol) has been aborted (Step S1).

Here, in a case where the previous processing has been aborted (Yes in Step S1), the RA-Source notifies the RA-Sink as the request source of a result code notifying that the registration processing has ended in "failure" (Step S9) and ends the processing routine.

In a case where the previous processing has ended normally (No in Step S1), the RA-Source checks whether RESPONSE2 (described above) has been received (Step S2). Then, when RESPONSE2 is received (Yes in Step S2), the RA-Source sets an IDu as the ID of the RA-Sink as the request source (Step S3). On the other hand, when RESPONSE2 is not received (No in Step S2), the RA-Source sets the Device ID as the ID of the RA-Sink as the request source (Step S4).

Subsequently, the RA-Source checks whether the ID of the RA-Sink as the request source is already registered in the RA registry (Step S5).

Here, when the ID of the RA-Sink as the request source is already registered in the RA registry (Yes in Step S5), the RA-Source notifies the RA-Sink as the request source of a result code notifying that the registration processing has ended in "success" (Step S8) and ends the processing routine.

On the other hand, when the ID of the RA-Sink as the request source is not yet registered in the RA registry (No in Step S5), the RA-Source then checks whether there is room in the RA registry inside the storage section 14 (Step S6).

Here, when there is no room in the RA registry (No in Step S6), the RA-Source notifies the RA-Sink as the request source of a result code notifying that the registration processing has ended in "failure" (Step S9) and ends the processing routine.

Further, when there is room in the RA registry (Yes in Step S6), the RA-Source additionally registers the ID of the RA-Sink in the RA registry (Step S7). Then, the RA-Source notifies the RA-Sink as the request source of a result code notifying that the registration processing has ended in "success" (Step S8) and ends the processing routine.

As described above with reference to Figs. 7 and 8, when succeeding in the authentication processing similar to the RTT-AKE, the RA-Source additionally registers, if there is room, the ID of the RA-Sink in the RA registry. The RA-Sink needs to register its own ID in the RA registry of the RA-Source via the authentication processing for remotely accessing the RA-Source.

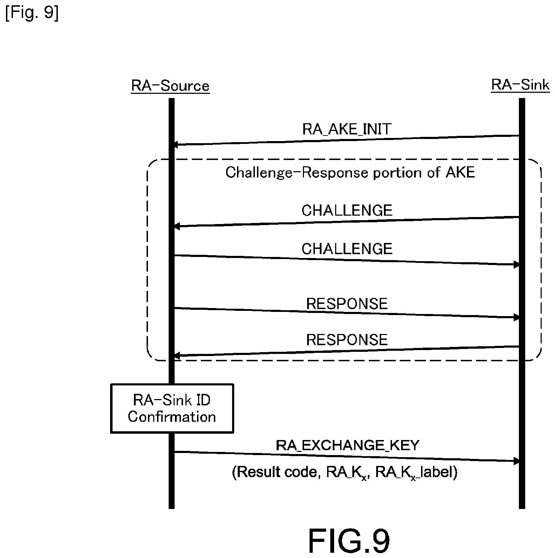

Therefore, the RA-Source can limit the number of RA-Sinks that can use the RA-Source based on the registerable number of the RA registry and thus limit a scale of an illegal use of contents. Fig. 9 shows an example of an authentication sequence at a time the RA-Source supplies a remote access exchange key to the RA-Sink. The sequence shown in Fig. 9 includes a mechanism of limiting the number of RA-Sinks to supply the remote access exchange key.

This authentication sequence is started by the RA-Sink transmitting a key supply request command "RA_AKE_INIT" to the RA-Source. In the challenge-response portion of the RA-AKE processing (Challenge-Response portion of AKE), an Rx challenge including Rx random numbers and an Rx certificate is first transmitted from the RA-Sink. In response to the challenge, a Tx challenge including Tx random numbers and a Tx certificate is sent back from the RA-Source. After that, an Rx response including the Rx random numbers, a Tx message, and a Tx signature is transmitted from the RA-Source, whereas a Tx response including the Tx random numbers, an Rx message, and an Rx signature is transmitted from the RA-Sink.

It should be noted that information corresponding to the transmission of "RA_AKE_INIT", such as "RA_AKE_INIT flag", may be incorporated into the information to be transmitted as an Rx challenge instead of transmitting "RA_AKE_INIT".

Each challenge command includes a Device ID that is identification information unique to an apparatus. It should be noted that in the challenge-response portion, "RESPONSE2" may be transmitted as a response from the sink to the source. In this case, an IDu included in RESPONSE2 is used as the apparatus-specific identification information instead of the Device ID (as described above).

The limit on the TTL is necessary for the registration in the RA-Source but is omitted in the RA-AKE processing for supplying a remote access exchange key. Moreover, the Protected RTT Protocol is also omitted in the RA-AKE processing for supplying a key. Accordingly, the RA-Sink can request a remote access exchange key even under a remote environment, that is, use a content by a remote access.

Upon succeeding in the authentication processing, the RA-Source executes "RA-Sink ID Confirmation" processing. In this processing, the RA-Source confirms whether the ID of the RA-Sink as the request source is already registered in the RA registry and also confirms whether the supplied number of remote access exchange keys (KC) has exceeded an upper limit. Then, when those confirmations are made, the RA-Source transmits the remote access exchange key (RA_Kₓ), an ID of the exchange key (RA_Kₓ_label), and a result code to the RA-Sink using a command "RA_EXCHANGE_KEY".

It should be noted that the upper limit of the supplied number of remote access exchange keys KC is the same as or smaller than the number of IDs that can be registered in the RA registry inside the storage section 14. In other words, in addition to the method of limiting the scale of an illegal use of contents by limiting the number of advance registrations, it is possible to additionally limit the scale of an illegal use by limiting the number of usable RA-Sinks based on the upper limit of KC. Moreover, in addition to the limit on the number of registrations in the RA registry, it is possible to set the number of RA-Sinks that can be registered in the RA-Source to be larger than the number of RA-Sinks that can use a content by setting the upper limit of KC, with the result that time and effort in deleting an old registration content when registering a new RA-Sink can be omitted.

The supplied number of remote access exchange keys KC is the number of effective exchange keys out of the exchange keys supplied to the RA-Sinks from the RA-Source. Therefore, KC is 0 in an initial state where the exchange key is not supplied to any of the RA-Sinks, and KC can be reduced as much as the number of supplied exchange keys discarded by the RA-Source. Here, when the upper limit of KC is 2 or more, as an operation method of the remote access exchange key, there are a method of using one key for each RA-Sink and a method of using one key irrespective of the number of RA-Sinks. In the former method, KC is decremented by 1 when one exchange key is discarded, and in the latter method, KC is reset to 0 when the exchange key is discarded.

For the discard of the remote access exchange key (RA_Kₓ), an operation that is based on a rule of discarding the exchange key before the continuous unused time exceeds a predetermined time period as in the DTCP-IP is conceivable. Moreover, an operation form in which the RA-Sink transmits a command to request discard of the exchange key (RA_FINISH) together with the ID of the exchange key (RA_Kₓ_label) at a time of ending the remote access is also conceivable. The discard request command RA_FINISH is added to the AKE control command for the DTCP-IP as a remote access command together with "RA_AKE_INIT" and "RA_EXCHANGE_KEY" of Fig. 9.

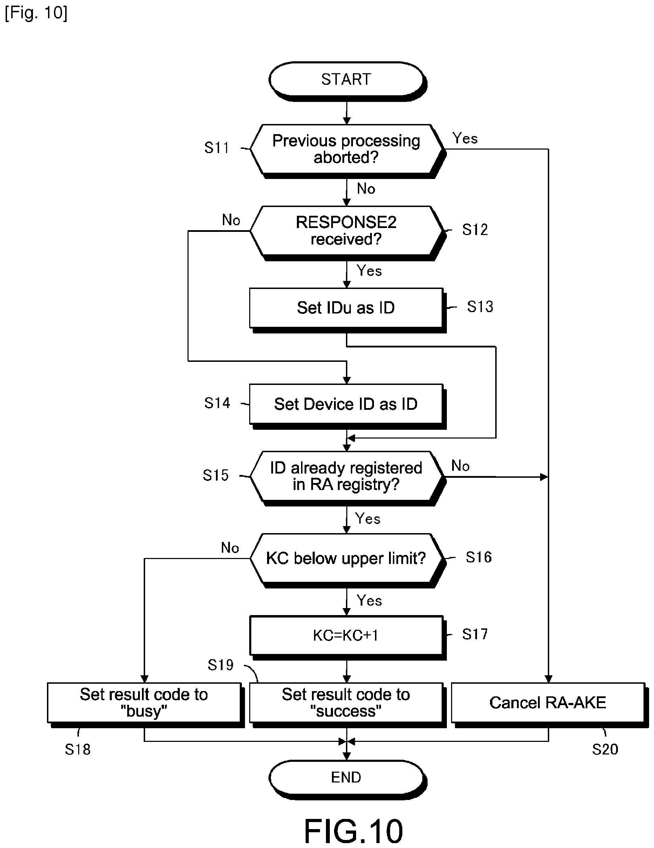

Fig. 10 shows a flowchart of a procedure of the "RA-Sink ID Confirmation" processing for the RA-Source to confirm a registration of the RA-Sink and the supplied number of remote access exchange keys.

The RA-Source first checks whether previous processing that has been carried out before the processing routine (Challenge-Response portion of AKE and Protected RTT Protocol) has been aborted (Step S11).

Here, in a case where the previous processing has been aborted (Yes in Step S11), the RA-Source cancels the RA-AKE processing with respect to the RA-Sink as the request source (Step S20) and ends the processing routine.

In a case where the previous processing has ended normally (No in Step S11), the RA-Source checks whether RESPONSE2 has been received (Step S12). Then, when RESPONSE2 is received (Yes in Step S12), the RA-Source sets an IDu as the ID of the RA-Sink as the request source (Step S13). On the other hand, when RESPONSE2 is not received (No in Step S12), the RA-Source sets the Device ID as the ID of the RA-Sink as the request source (Step S14). Subsequently, the RA-Source checks whether the ID of the RA-Sink as the request source is already registered in the RA registry inside the storage section 14 (Step S15).

Here, when it cannot be confirmed that the ID of the RA-Sink as the request source is registered in the RA registry (No in Step S15), the RA-Source cancels the RA-AKE processing with respect to the RA-Sink as the request source (Step S20) and ends the processing routine.

On the other hand, when it is confirmed that the ID of the RA-Sink as the request source is already registered in the RA registry (Yes in Step S15), the RA-Source then checks whether the supplied number of remote access exchange keys KC is smaller than an upper limit value (Step S16).

When it is confirmed that the supplied number of remote access exchange keys KC is smaller than the upper limit value (Yes in Step S16), the RA-Source increments KC only by 1 (Step S17), notifies the RA-Sink as the request source of a result code notifying that the confirmation processing has ended in "success" together with the remote access exchange key (RA_Kₓ) and an ID thereof (RA_Kₓ_label) (Step S19), and ends the processing routine.

On the other hand, when it is confirmed that the supplied number of remote access exchange keys KC has reached the upper limit (No in Step S16), the RA-Source notifies the RA-Sink as the request source of a result code notifying a "busy" state (Step S18) and ends the processing routine.

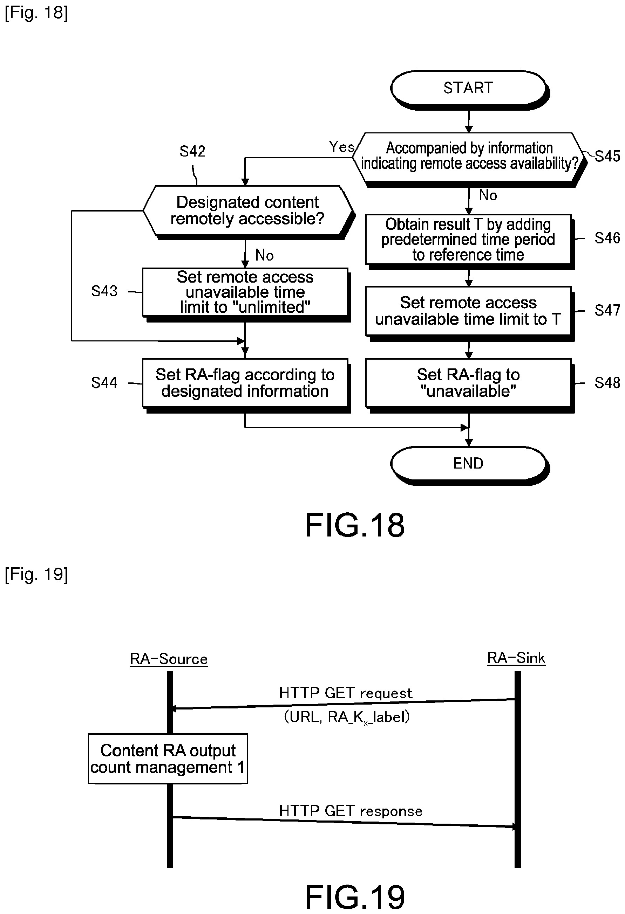

When the remote access exchange key is shared by the RA-Source and the RA-Sink, a content transmission by a remote access becomes possible. Fig. 19 shows an operational sequence for the RA-Sink to request a content from the RA-Source. It should be noted that in Fig. 19, the RA-Sink requests a content from the RA-Source based on the HTTP protocol, and the content is transmitted by a download method.

After obtaining the remote access exchange key (RA_Kₓ) and the ID thereof (RA_Kₓ_label) by the RA-AKE processing shown in Fig. 9, the RA-Sink requests content data from the RA-Source by an HTTP request (HTTP GET request) that uses an HTTP GET method. In requesting content data, the ID of the remote access exchange key (RA_Kₓ_label) is transmitted with a content URL. Here, a header field for transmitting the exchange key ID (RA_Kₓ_label) from the RA-Sink to the RA-Source will be defined.

Upon receiving the content data request, the RA-Source executes processing of a "content remote access (RA) output management 1" for checking the number of remote access outputs of the requested content. Then, after confirming that the content of the URL designated in the request can be output by a remote access, the RA-Source calculates an encryption key using a remote access exchange key designated by the exchange key ID and sends back the content encrypted by the encryption key as an HTTP response (HTTP GET response).

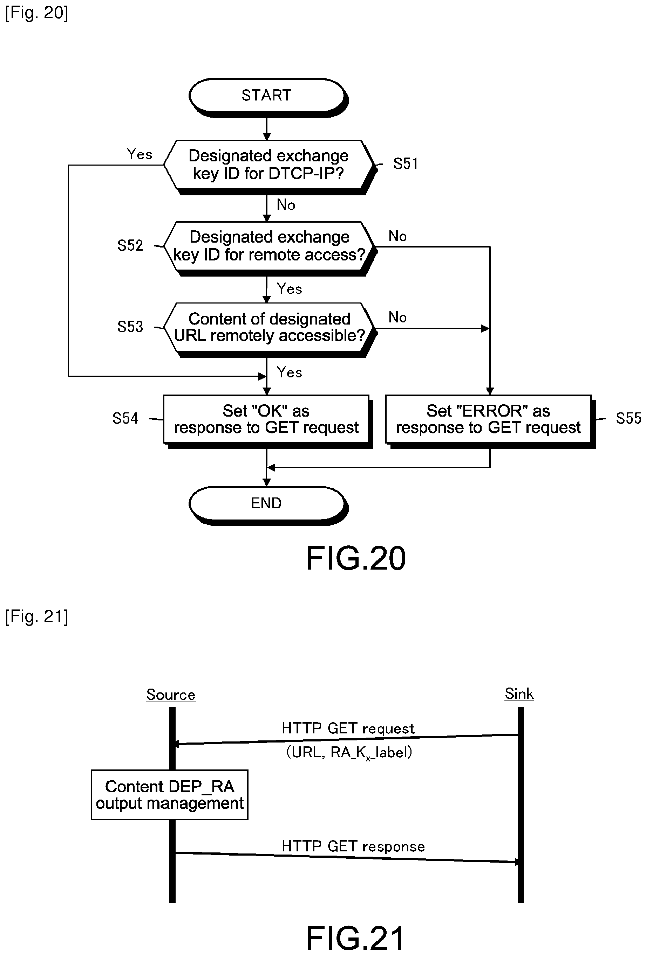

Fig. 20 shows a flowchart of a processing procedure of the "content remote access (RA) output management 1" executed by the RA-Source.

First, the RA-Source checks whether an exchange key indicated by an exchange key ID included in an HTTP request is for a DTCP-IP (Step S51).

Here, when the exchange key indicated by the exchange key ID included in the HTTP request is not for a DTCP-IP (No in Step S51), the RA-Source then checks whether the exchange key is for a remote access (Step S52).

When the exchange key is for a remote access (Yes in Step S52), the RA-Source checks whether a content designated by a URL included in the HTTP request is remotely accessible (Step S53). Whether the content is remotely accessible can be managed using, for example, an RA-flag (to be described later).

When the exchange key indicated by the exchange key ID included in the HTTP request is for a DTCP-IP (Yes in Step S51) or when the content designated by the HTTP request is remotely accessible (Yes in Step S53), the RA-Source sets OK as a response to the HTTP request (HTTP GET request) from the RA-Sink (Step S54) and ends the processing routine.

On the other hand, when the exchange key indicated by the exchange key ID included in the HTTP request is not for a remote access (No in Step S52) or when the content designated by the HTTP request is not remotely accessible (No in Step S53), the RA-Source sets ERROR as a response to the HTTP request (HTTP GET request) from the RA-Sink (Step S55) and ends the processing routine.

In the descriptions heretofore, the communication system has been assumed to be constituted only of a pair of RA-Source and RA-Sink. However, each of the RA-Source and the RA-Sink may be additionally connected to another apparatus in a daisy chain mode and transmit a content in that state. A transmission range of a copyright-protected content should originally be within homes, and repetitive receptions and transmissions of a contents are unfavorable. Therefore, there is a need to technically prevent contents from being repetitively received and transmitted. In this embodiment, for more strict limits on the RTT and TTL at a time of the registration and supplied number of keys, several rules are added.

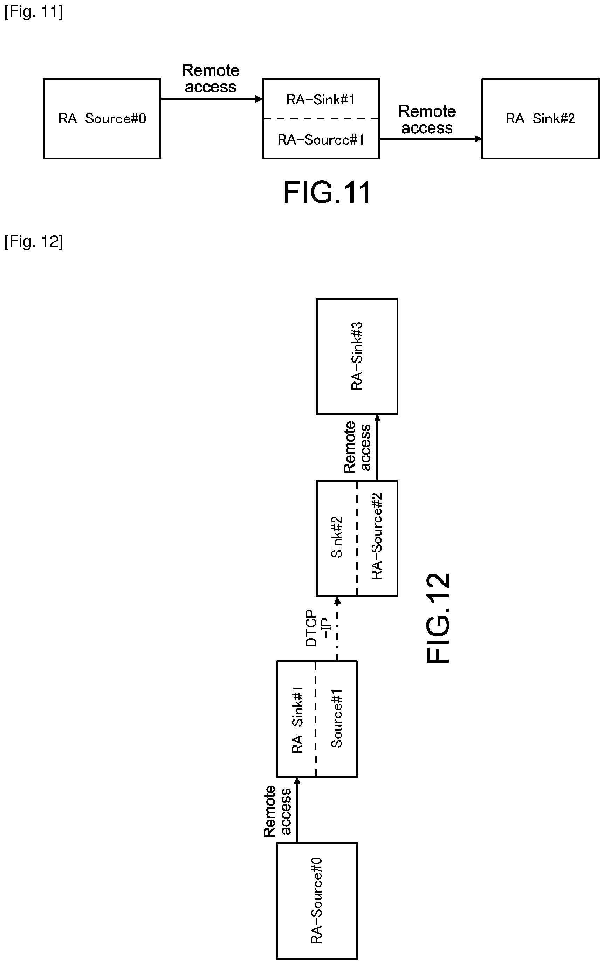

In the example of the system structure shown in Fig. 11, an RA-Sink#1 that connects with an RA-Source#0 additionally includes a function as an RA-Source#1 and is connected to another apparatus RA-Sink#2. In such a case, by inhibiting a content received by remotely accessing the RA-Source as the RA-Sink#1 to be additionally output to the RA-Sink#2 by a remote access as the RA-Source#1, the content is prevented from being remotely accessed from a location that a management of the RA-Source#0 as a content provider cannot reach.

Moreover, in the example of the system structure shown in Fig. 12, the RA-Sink#1 is connected with the RA-Source#0 by a remote access and also connected to another apparatus Sink#2 by a DTCP-IP due to a function as a Source#1. In addition, the Sink#2 also includes a function as an RA-Source#2 and is thus connected to another apparatus RA-Sink#3. The RA-Sink#1 is capable of locally transmitting a content received by a remote access to another apparatus Sink#2 by the DTCP-IP. The local transmission by the DTCP-IP is based on the mechanism for a copyright protection and is of no problem. Further, by inhibiting a content received by the Sink#2 to be additionally output to the RA-Sink#3 by a remote access as the RA-Source#2, the content is prevented from being remotely accessed from a location that a management of the RA-Source#0 as a content provider cannot reach.

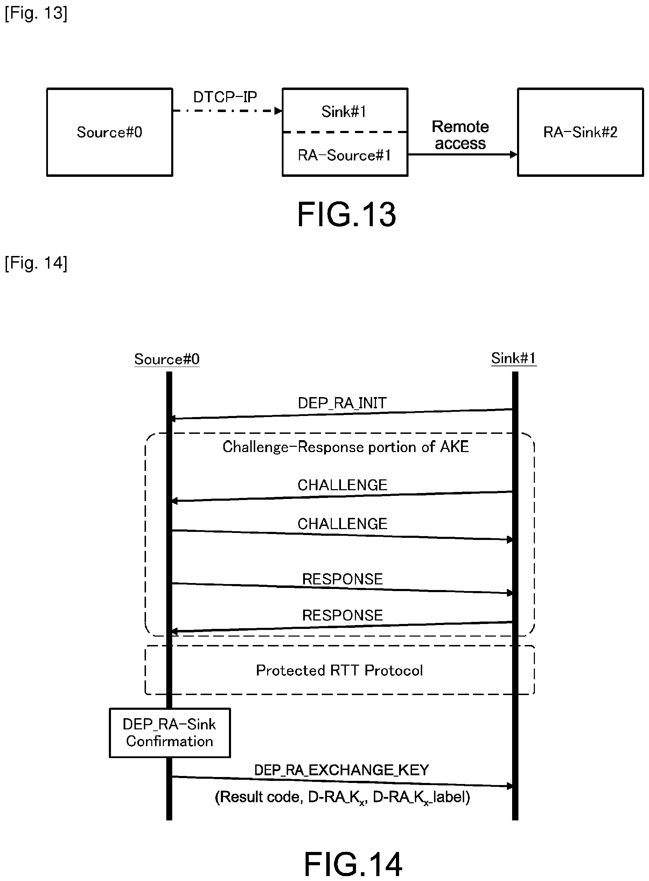

In short, the system operation described with reference to Figs. 11 and 12 inhibits an apparatus to output, by a remote access, a content received by the remote access or a local transmission by the DTCP-IP to thus prevent a remote access unintended by the content provider. As a method of realizing such an operation, there is a method of setting the following rules (1) and (2) at a time of the remote access and local transmission of a content.
(1) The RA-Source does not perform a remote access output unless a content is accompanied by information of "remote access output available".
(2) The RA-Source and the source do not transmit information indicating an availability of a remote access output at a time of the remote access or the local transmission by the DTCP-IP. In the example of the system structure shown in Fig. 13, the Sink#1 that connects with the Source#0 by the DTCP-IP also has a function as the RA-Source#1 and is thus connected to another apparatus RA-Sink#2. The Source#0 can locally transmit a content to the Sink#1 only by the DTCP-IP. The local transmission by the DTCP-IP is based on the mechanism for a copyright protection and is of no problem. Here, when the limit rules (1) and (2) are imposed, the Sink#1 cannot additionally output, as the RA-Source#1, the received content to the RA-Sink#2 by a remote access.

In this case, although a remote access output at a location where the management of the content provider cannot reach can be prevented, even a content accompanied by the information of "remote access output available" is not output by the remote access. In this regard, the inventors of the present invention consider that there is no need to inhibit the operation in which the RA-Source#1 additionally outputs, as the Sink#1, by the remote access, a content received by the local transmission via the DTCP-IP to another apparatus RA-Sink#2 in substitution for the Source#0 (i.e., substitute remote access output). The operation of substituting the remote access output can be realized by the Source#0 sharing a key with only the Sink#1 by performing a DEP-RA-AKE, the Sink#1 encrypting a content using that key and transmitting it, and the RA-Source#1 outputting the content by a remote access.

Fig. 14 shows an example of an authentication sequence at a time the Source#0 shares a key with only the Sink#1 by performing the DEP-RA-AKE.

This authentication sequence is started by the Sink#1 transmitting a key supply request command "DEP_RA_INIT" to the Source#0. In the challenge-response portion of the AKE processing (Challenge-Response portion of AKE), an Rx challenge including Rx random numbers and an Rx certificate is first transmitted from the Sink#1. In response to the challenge, a Tx challenge including Tx random numbers and a Tx certificate is sent back from the Source#0. After that, an Rx response including the Rx random numbers, a Tx message, and a Tx signature is transmitted from the Source#0, whereas a Tx response including the Tx random numbers, an Rx message, and an Rx signature is transmitted from the Sink#1.

It should be noted that information corresponding to the transmission of "DEP_RA AKE", such as "DEP_RA_AKE flag", may be incorporated into the information to be transmitted as an Rx challenge instead of transmitting "DEP_RA_AKE".

Each challenge command includes a Device ID that is identification information unique to an apparatus. It should be noted that in the challenge-response portion, "RESPONSE2" may be transmitted as a response from the sink to the source. In this case, an IDu included in RESPONSE2 is used as the apparatus-specific identification information instead of the Device ID (as described above).

The limit on the TTL is imposed since the AKE processing is performed via the DTCP-IP. Further, the Protected RTT Protocol follows. The DEP-RA-AKE processing for substituting the remote access output should only be carried out locally, and the limits on the RTT and TTL are imposed as in the RTT-AKE in the current DTCP-IP.

Upon succeeding in the authentication processing, the Source#0 executes "DEP_RA-Sink Confirmation" processing. In this processing, the Source#0 shares a key with only the Sink#1 and inhibits the DEP-RA-AKE with other apparatuses. Then, when confirming that the key can be shared with only the Sink#1, the Source#0 transmits an exchange key for a remote access output substitution (D-RA_Kₓ), an ID thereof (O-RA_Kₓ_label), and a result code to the Sink#1 using a command "DEP-RA_EXCHANGE_KEY".

After that, the Source#0 inhibits the DEP-RA-AKE with other apparatuses until the key shared by the AKE is discarded. Moreover, on the Sink#1 side, using the exchange key for a remote access output substitution shared via the processing procedure, a content is encrypted and transmitted while being accompanied by the information of "remote access output available". Thus, the Sink#1 can output, by the remote access, the content to the RA-Sink#2 as the RA-Source#1.

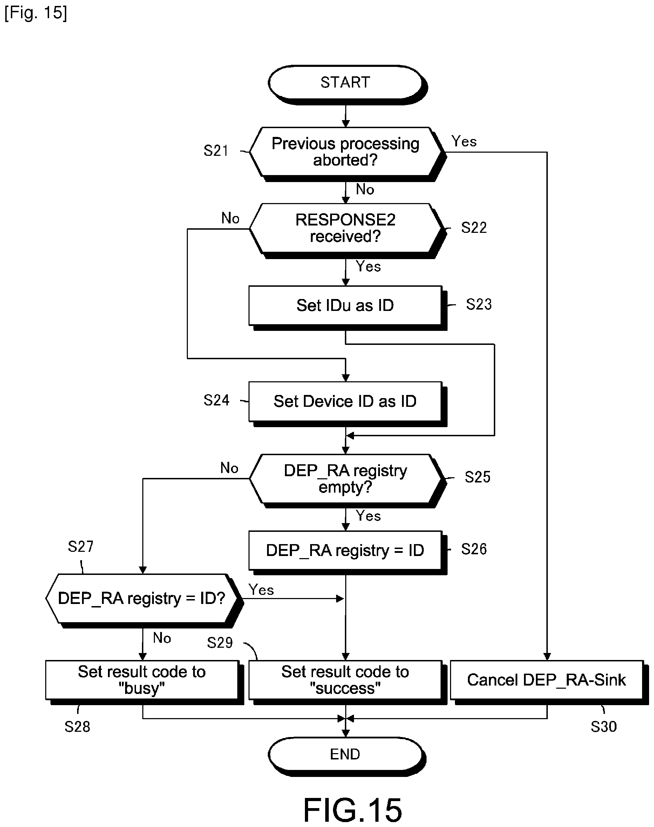

Fig. 15 shows a flowchart of a procedure of the "DEP_RA-Sink Confirmation" processing for the source to authenticate the sink for a substitution of a remote access output.

The source first checks whether previous processing that has been carried out before the processing routine (Challenge-Response portion of AKE and Protected RTT Protocol) has been aborted (Step S21).

Here, in a case where the previous processing has been aborted (Yes in Step S21), the source cancels the DEP_RA-Sink processing with respect to the sink as the request source (Step S30) and ends the processing routine.

In a case where the previous processing has ended normally (No in Step S21), the source checks whether RESPONSE2 has been received (Step S22). Then, when RESPONSE2 is received (Yes in Step S22), the source sets an IDu as the ID of the sink as the request source (Step S23). On the other hand, when RESPONSE2 is not received (No in Step S22), the source sets the Device ID as the ID of the sink as the request source (Step S24).

Subsequently, the source checks whether its own DEP_RA registry is empty (Step S25). The DEP_RA registry is a registry prepared inside the storage section 14 for storing an ID of a single apparatus to which a content is permitted to be output by a remote access.

Here, when it is confirmed that the DEP_RA registry is empty (Yes in Step S25), the source substitutes an ID of the sink as the request source in the DEP_RA registry (Step S26). Then, the source transmits an exchange key for a remote access output substitution (D-RA_Kₓ), an ID thereof (O-RA_Kₓ_label), and a result code to the Sink#1 using a command "DEP-RA_EXCHANGE_KEY" (Step S29) and ends the processing routine.

On the other hand, when it is confirmed that the DEP_RA registry is not empty (No in Step S25), the source further checks whether the ID stored in the DEP_RA registry matches the ID of the sink as the request source (Step S27).

When the ID stored in the DEP_RA registry matches the ID of the sink as the request source, that is, when the sink as the request source is already registered as an apparatus for substituting a remote access output of a content (Yes in Step S27), the source transmits an exchange key for a remote access output substitution (D-RA_Kₓ), an ID thereof (D-RA_Kₓ_label), and a result code to the Sink#1 using the command "DEP-RA_EXCHANGE_KEY" (Step S29) and ends the processing routine.

On the other hand, when the ID stored in the DEP_RA registry does not match the ID of the sink as the request source (No in Step S27), the source notifies the sink as the request source of the result code notifying a "busy" state (Step S28) and ends the processing routine.

After executing the processing procedure shown in Fig. 15, the source cannot redundantly perform DEP-RA-AKE with other apparatuses. Moreover, by emptying the DEP_RA registry at a time of discarding the exchange key for a remote access output substitution (D-RA_Kₓ) shared by the DEP-RA-AKE, it becomes possible to perform the DEP-RA-AKE with other apparatuses. For the discard of the exchange key for a remote access output substitution (D-RA_Kₓ), an operation form in which the sink transmits a command to request discard of the exchange key (DEP_RA_FINISH) together with the ID of the exchange key (D-RA_Kₓ_label) at a time of ending the remote access output substitution is conceivable. The discard request command DEP_RA_FINISH is added to the AKE control command of the DTCP-IP as a remote access command together with "DEP_RA_INIT" and "DEP_RA_EXCHANGE_KEY" of Fig. 14.

Fig. 21 shows an operational sequence for the sink (having function as RA-Source) to request a content for which a remote access is to be substituted from the source. It should be noted that in Fig. 21, the sink requests a content from the source in accordance with the HTTP protocol, and the content is transmitted by the download method.

After obtaining the exchange key for a remote access output substitution (D-RA_Kₓ) and the ID thereof (O-RA_Kₓ_label) by the DEP-RA-AKE processing shown in Fig. 14, the sink requests content data from the source by an HTTP request (HTTP GET request) that uses an HTTP GET method. In requesting content data, the ID of the exchange key for a remote access output substitution (D-RA_Kₓ_label) is transmitted with a content URL. Here, a header field for transmitting the exchange key ID (O-RA_Kₓ_label) from the sink to the source will be defined. Upon receiving the request for a remote access output substitution of a content, the source executes processing of a "content remote access substitution (DEP-RA) output management 1" for checking whether a remote access output of the requested content can be substituted.

Then, after confirming that the remote access output of the content of the URL designated in the request can be substituted, the source calculates an encryption key using the exchange key for a remote access output substitution designated by the exchange key ID and sends back the content encrypted by the encryption key as an HTTP response (HTTP GET response) while the content is accompanied by the information of "remote access output available".

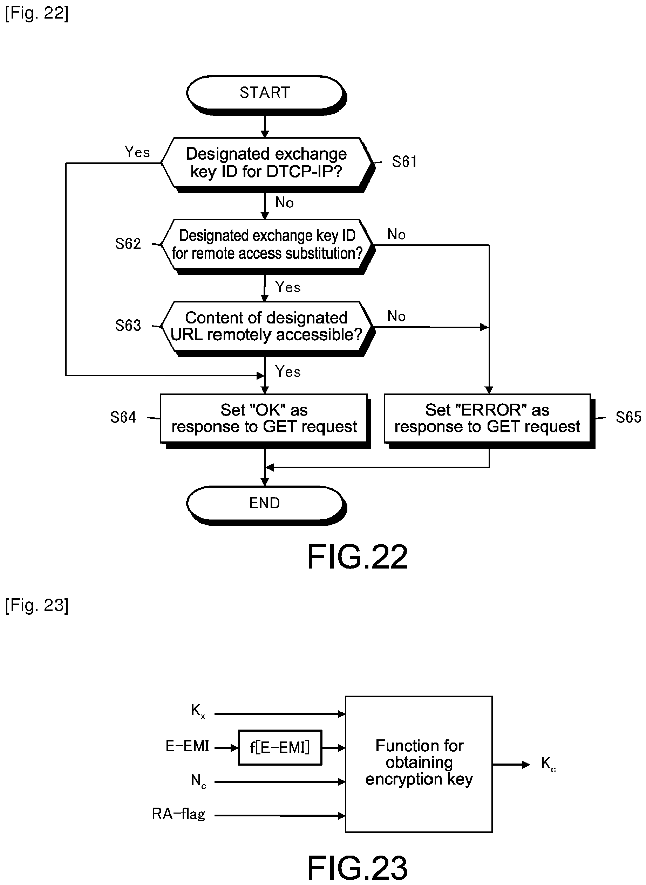

Fig. 22 shows a flowchart of a processing procedure of the content remote access output substitution management that is performed by the source requested to substitute a remote access output.

First, the source checks whether an exchange key indicated by an exchange key ID included in an HTTP request is for a DTCP-IP (Step S61).

Here, when the exchange key indicated by the exchange key ID included in the HTTP request is not for a DTCP-IP (No in Step S61), the source then checks whether the exchange key is for a remote access output substitution (Step S62).

When the exchange key is for a remote access output substitution (Yes in Step S62), the source checks whether a content designated by a URL included in the HTTP request is remotely accessible (Step S63). Whether the content is remotely accessible can be managed using, for example, an RA-flag (to be described later).

When the exchange key indicated by the exchange key ID included in the HTTP request is for a DTCP-IP (Yes in Step S61) or when the content designated by the HTTP request is remotely accessible (Yes in Step S63), the source sets OK as a response to the HTTP request (HTTP GET request) from the sink (Step S64).

On the other hand, when the exchange key indicated by the exchange key ID included in the HTTP request is not for a remote access output substitution (No in Step S62) or when the content designated by the HTTP request is not remotely accessible (No in Step S63), the source sets ERROR as a response to the HTTP request (HTTP GET request) from the sink (Step S65).

It should be noted that in the system structure shown in Fig. 13, although a content transmission is performed based on the current DTCP-IP when a remotely-inaccessible content is to be transmitted from the Source#0 to the Sink#1, by the following structure, both the remotely-accessible content and the remotely-inaccessible content can be handled in the transmission that uses an exchange key for a remote access output substitution (D-RA_Kₓ).

In the content transmission that uses an exchange key shared by the DEP-RA-AKE, the Source#0 adds remote access availability information (RA-flag) to a content so that the RA-Source#1 can judge whether the received content can be output by a remote access.

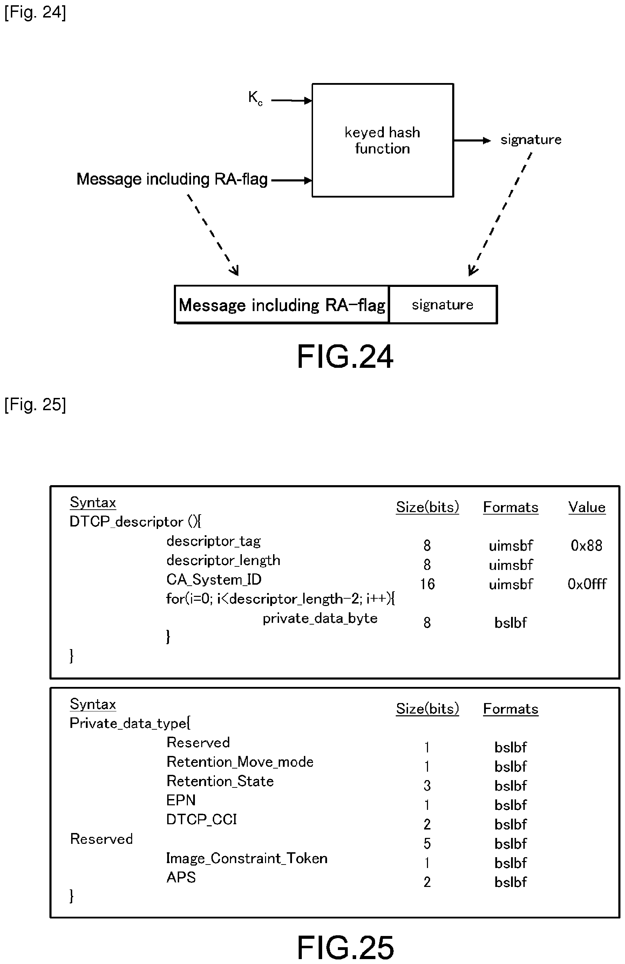

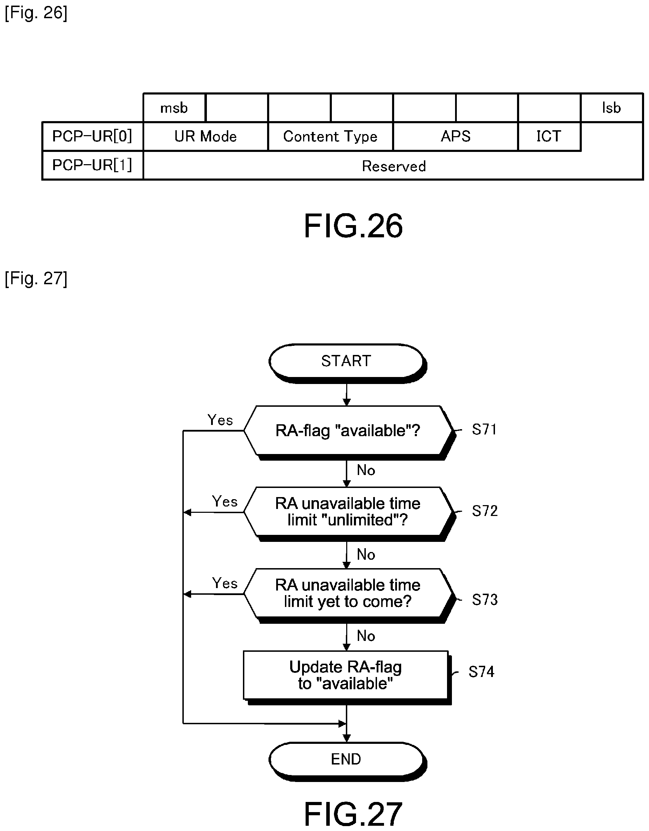

It should be noted that falsifications can be prevented from occurring by a method of encrypting an RA-flag with content data or inputting a value of an RA-flag to a function for calculating an encryption key and reflecting it on a value of an encryption key K_{c} (see Fig. 23) or a method of transmitting plain-text information including an RA-flag together with signature data (signature) obtained by processing the information and an encryption key by a hash function (see Fig. 24). Moreover, when encrypting the RA-flag with content data, it is possible to provide, as a storage destination, DTCP_descriptor operated by the DTCP-IP, a reserved bit of PCP-UR (see Figs. 25 and 26), or a container of new content-related information and store the RA-flag therein.

It should be noted that in the system structure described above shown in Fig. 13, it is assumed that the Sink#1 outputs a content from the Source#0 by a remote access via the RA-Source#1 without recording it. As a modified example, also in a case of MOVE of a content from the Source#0 to the Sink#1, the RA-Source#1 can judge whether the received content can be output by a remote access by appending remote access availability information (RA-flag) at a time of the content transmission using a key shared by the DEP-RA-AKE. Here, the MOVE function used in the DTCP-IP refers to a transmission of an encrypted content from the source to the sink under the conditions that the sink encodes and records the received content as No More Copies and that the transmitted content is deleted or made unusable on the source side. The method of limiting the number of RA-Sinks that can use the RA-Source has been described heretofore. However, some content owners may demand to suppress a threat of a falsification by limiting the number of apparatuses that can simultaneously use a content that the owner him/herself provides through the remote access, as in a case where a recording-inhibited pay program is immediately output by a receiver via a remote access.

As the method of limiting the number of remote accesses of contents, there is a method of managing which content is being remotely accessed by which RA-Sink as well as change the key to be shared in the RA-AKE for each RA-Sink. Moreover, it is only necessary for the RA-Source to not transmit the same content to a predetermined number of RA-Sinks or more at the same time.

The RA-Source uses, for example, a management table as shown below for limiting the number of RA-Sinks that can remotely access a content at the same time.

**[Table 1]**

| URL | RA_Kₓ_label |
|---|---|
| (URL for Content X) | 80 |
| (URL for Content Y) | 81 |

In the management table, a combination of a URL of a content that is being transmitted to an RA-Sink and an exchange key ID (RA_Kₓ_label) having a one-on-one correspondence with the RA-Sink is managed in each entry. An entry in which the URL matches but the exchange key ID differs in the management table means that a single content is being used by different RA-Sinks.

The RA-Source references the management table before newly starting a content transmission and performs control so that the same content is not transmitted to more than a predetermined number of RA-Sinks. When a content transmission is permitted to be started, the RA-Source adds an entry constituted of a combination of a URL and an exchange key ID in the management table.

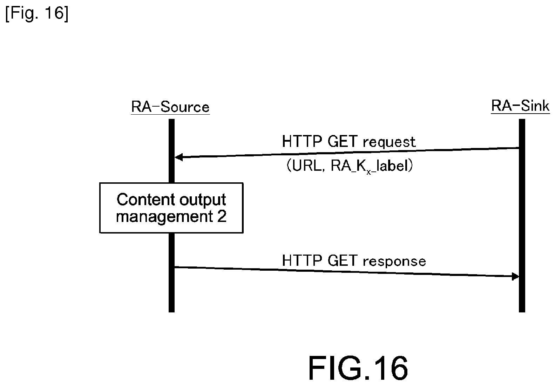

Fig. 16 shows an operational sequence at a time the RA-Sink requests a content from the RA-Source in a case where the number of RA-Sinks to which the same content is transmitted at the same time is limited.

After obtaining a remote access exchange key (RA_Kₓ) and an ID thereof (RA_Kₓ_label) by the RA-AKE processing shown in Fig. 9, the RA-Sink requests content data from the RA-Source by an HTTP request (HTTP GET request) that uses an HTTP GET method. In requesting content data, the ID of the remote access exchange key (RA_Kₓ_label) is transmitted with a content URL. Here, a header field for transmitting the exchange key ID (RA_Kₓ_label) from the RA-Sink to the RA-Source will be defined.

Upon receiving the content data request, the RA-Source executes processing of a "single-content remote access (RA) output management 2" for checking the number of RA-Sinks to output a requested content by a remote access at the same time. When the number of RA-Sinks to transmit a content of a designated URL at the same time is below the limit, the RA-Source calculates an encryption key using a remote access exchange key designated by the exchange key ID and sends back the content encrypted by the encryption key as an HTTP response (HTTP GET response). Further, the RA-Source adds an entry in the management table.

It should be noted that when the RA-Source discards a remote access exchange key, an entry corresponding to the discarded key is deleted from the table. In addition, it is also possible to transmit, together with the remote access exchange key ID (RA_Kₓ_label), a command to request a deletion of an entry from the management table at a time the RA-Sink ends the remote access (RA_FINISH) (as described above).

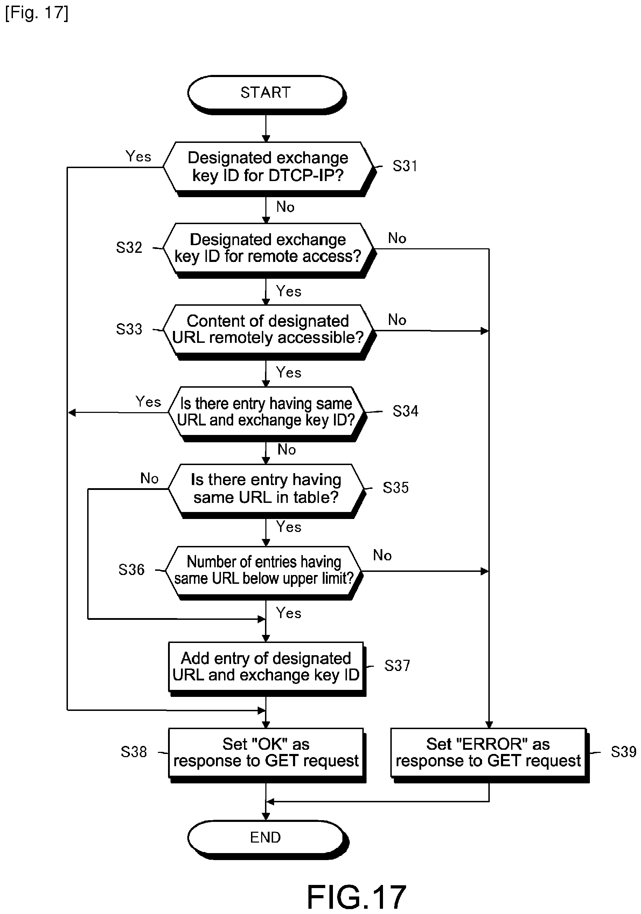

Fig. 17 shows a flowchart of a processing procedure that is executed by the RA-Source in response to a content data request, for managing the number of outputs of the same content. First, the RA-Source checks whether an exchange key indicated by an exchange key ID included in an HTTP request is for a DTCP-IP (Step S31).

Here, when the exchange key indicated by the exchange key ID included in the HTTP request is for a DTCP-IP (Yes in Step S31), the RA-Source sets OK as a response to the HTTP request (HTTP GET request) from the RA-Sink (Step S38) and ends the processing routine.

When the exchange key indicated by the exchange key ID included in the HTTP request is not for a DTCP-IP (No in Step S31), the RA-Source then checks whether the exchange key is for a remote access (Step S32).

When the exchange key is for a remote access (Yes in Step S32), the RA-Source checks whether a content designated by a URL included in the HTTP request is remotely accessible (Step S33). Whether the content is remotely accessible can be managed using, for example, an RA-flag (to be described later).

When the exchange key indicated by the exchange key ID included in the HTTP request is not for a remote access (No in Step S31) or when the content designated by the HTTP request is not remotely accessible (No in Step S33), the RA-Source sets ERROR as a response to the HTTP request (HTTP GET request) from the RA-Sink (Step S39) and ends the processing routine.

Further, when it is confirmed that the content designated by the HTTP request is remotely accessible (Yes in Step S33), the RA-Source checks whether there is an entry whose URL and exchange key ID are the same as the URL and the exchange key ID (RA_Kₓ_label) included in the content data request in the management table (Step S34).

Here, when there is an entry whose URL and exchange key ID are the same as the URL and the exchange key ID (RA_Kₓ_label) included in the content data request in the management table (Yes in Step S34), the use limit is not exceeded even when the content is used by the RA-Sink as the request source. In this regard, the RA-Source sets "OK" as a response to the HTTP GET request from the RA-Sink as the request source (Step S38) and ends the processing routine.

On the other hand, when there is no entry whose URL and exchange key ID are the same as the URL and the exchange key ID (RA_Kₓ_label) included in the content data request in the management table (No in Step S34), the RA-Source then checks whether there is an entry having the same URL in the management table (Step S35).

When there is no entry whose URL is the same as that included in the content data request in the management table (No in Step S35), the use limit is not exceeded even when the content is used by the RA-Sink as the request source. In this regard, the RA-Source adds an entry constituted of a combination of the URL designated by the content data request and the exchange key ID (RA_Kₓ_label) in the management table (Step S37). Then, the RA-Source sets "OK" as a response to the HTTP GET request from the RA-Sink as the request source (Step S38) and ends the processing routine.

On the other hand, when there is an entry whose URL is the same as that included in the content data request in the management table (Yes in Step S35), there is a fear that the use limit may be exceeded if the RA-Source provides the content to the RA-Sink as the request source in response to the request. In this regard, the RA-Source further checks whether the number of entries whose URLs are the same as that included in the content data request is smaller than an upper limit value in the management table (Step S36).

When the number of entries whose URLs are the same as that included in the content data request is smaller than the upper limit value in the management table (Yes in Step S36), the use limit is not exceeded even when the content is used by the RA-Sink as the request source. In this regard, the RA-Source adds an entry constituted of a combination of the URL designated by the content data request and the exchange key ID (RA_Kₓ_label) in the management table (Step S37), sets "OK" as a response to the HTTP GET request from the RA-Sink as the request source (Step S38), and ends the processing routine.

If the number of entries whose URLs are the same as that included in the content data request has reached the upper limit value in the management table (No in Step S36), the use limit is exceeded when the content is used by the RA-Sink as the request source. Therefore, the RA-Source sets "ERROR" as a response to the HTTP GET request from the RA-Sink as the request source (Step S39) and ends the processing routine.

The above descriptions have been made based on the presupposition that a content not accompanied by the information of "remote access output available" cannot be remotely accessed. However, in actuality, if the content is a recordable content, by writing the content in a removable recording medium such as a DVD and a memory card, the content can be carried outside a home and used in a different apparatus. Thus, an operation that enables a recordable content to be remotely accessed after the content is recorded even when the content is not accompanied by the information of "remote access output available" is also possible.

It should be noted that since a content received by the RA-Sink can be taken out after being fully written in the case where the write destination of the content is a removable recording medium, suppression of a remote access may also be demanded during recording of the content or until a predetermined time period passes since the start of the recording.

Fig. 18 shows a flowchart of a processing procedure for an apparatus operating as the RA-Source to record a content or take in the content by a MOVE function.

The RA-Source first checks whether a received content is accompanied by information on a "remote access output availability" (Step S41).

Here, when the received content is accompanied by the information on the "remote access output availability" (Yes in Step S45), the RA-Source further checks whether a designated content of the information is "remote access output available" (Step S42).

Here, when the designated content of the information on the "remote access output availability" is not "remote access output available" (No in Step S42), the RA-Source sets "unlimited" as a remote access unavailable time limit based on that information (Step S43).

Subsequently, the RA-Source sets an RA-flag indicating an availability of a remote access output of the received content (Step S44) and ends the processing routine.

On the other hand, when the content is not accompanied by the information on the "remote access output availability" (No in Step S45), the RA-Source obtains a value T as a result of adding a predetermined time period to a time at a reference time point (Step S46), sets T as a remote access unavailable time limit of the content (Step S47), initializes the RA-flag to "unavailable" in the setting to inhibit a remote access output of the content until that time limit (Step S48), and ends the processing routine.

Here, the reference time point refers to a time at a timing at which a head of a program is broadcasted if the content is, for example, a broadcast content, and a time length of the program that is transmitted with the content as program information or the like is used as the predetermined time period to be added thereto. For contents in the recording medium for which recorded dates are unclear, a value obtained by adding a content reproduction length to a time at which an attempt to take in a content by a MOVE function has been made may be used as T.

It should be noted that although not shown in Fig. 18, when the content is accompanied by information of "remote access output unavailable" (in Step S42), the RA-Source sets "unavailable" as the RA-flag and sets "unlimited" as T.

A content whose RA-flag is set to "unavailable" and whose T cannot be set to "unlimited" through the processing procedure shown in Fig. 18 can be handled as a remotely-accessible content after the designated timing.

Fig. 27 shows a flowchart of a processing procedure for the RA-Source to update the RA-flag and T that are set for a content.

The RA-Source first checks whether an RA-flag of a content is set to "available" (Step S71). Here, when the RA-flag of the content is already set to "available" (Yes in Step S71), subsequent processes are all skipped, and the processing routine is ended.

When the RA-flag of the content is not set to "available" (No in Step S71), the RA-Source then checks whether a remote access unavailable time limit of the content is set to "unlimited" (Step S72). Here, when the remote access unavailable time limit of the content is set to "unlimited" (Yes in Step S72), the subsequent processes are all skipped, and the processing routine is ended.

When the remote access unavailable time limit of the content is not set to "unlimited" (No in Step S72), the RA-Source then checks whether the remote access unavailable time limit of the content has passed (Step S73).

When the remote access unavailable time limit of the content is not yet passed (Yes in Step S73), the processing routine is immediately ended. On the other hand, when the remote access unavailable time limit of the content in not in the future, that is, when the remote access unavailable time limit has already passed (No in Step S73), the RA-Source updates the RA-flag of the content to "available" (Step S74) and ends the processing routine.

By the RA-Source periodically executing the processing procedure shown in Fig. 27, the RA-flag of the content can be updated to "available". A timing at which a content list (not shown) is presented outwardly, for example, can be exemplified as a specific execution timing of the processing procedure.

Contents have been used only within a home network in the DTCP-IP. However, by narrowing down possibilities of an illegal use in the communication system of this embodiment, contents can be used from outside homes, that is, by a remote access.

Moreover, in the communication system of this embodiment, by adjusting a plurality of limit values for limiting a remote access, such as limit values of an RTT, a TTL, the number of RA-Sinks to use a content, and the supplied number of exchange keys, the system can be constructed flexibly.

Further, according to the communication system of this embodiment, it is possible to realize a remote access of contents without imposing limits on the RTT and TTL while constructing the system based on the DTCP-IP communication protocol.

The functional structure of the content provision apparatus corresponding to the RA-Source in the communication system according to the present invention has already been described with reference to Fig. 3. For example, a personal computer, a recorder, or various other information apparatuses may function as the content provision apparatus.

Fig. 29 shows a structural example of a personal computer 80 to be applied to the content provision apparatus. The personal computer 80 shown in the figure includes circuit components such as a CPU 81, a RAM (Random Access Memory) 82, an EEPROM (Electrically Erasable and Programmable ROM) 83, a display 84, a speaker 85, a large-capacity information storage apparatus 86 including an HDD (Hard Disc Drive) and an SDD (Super Density Disc), and an I/O interface 87 which are mutually connected via a bus 88.

The CPU 81 reads out and executes programs loaded to the RAM 82 as a main memory. To the RAM 82, functions related to an encryption and decryption of contents are loaded. For example, a program for executing a DTCP-IP function and a program for executing RA-AKE processing are loaded to the RAM 82. Moreover, a program for executing the authentication sequence (see Fig. 7) at the time of registering the RA-Sink in the RA-Source is loaded to the RAM 82 as a part of the program for executing RA-AKE processing and executed by the CPU 81.

The EEPROM 83 is a rewritable nonvolatile storage apparatus and stores setting information and the like. When the personal computer 80 operates as the RA-Source, that is, the content provision apparatus, a terminal ID to be the RA-Sink is stored in the EEPROM 83.

On the personal computer 80, upon receiving a request to register an RA-Sink (e.g., mobile terminal) as a terminal with which an RA-AKE procedure can be performed from the RA-Sink, the CPU 81 reads out a program in which AKE processing of the DTCP-IP is described from the RAM 82 and executes an AKE procedure with the RA-Sink.

Upon succeeding in this procedure, the CPU 81 stores a terminal ID of the RA-Sink in the EEPROM 83 in accordance with the program stored in the RAM 82.

After that, on the personal computer 80, the CPU 81 executes, upon receiving a request for RA-AKE processing, processing of comparing an ID of the terminal that has issued the request and the terminal ID of the RA-Sink stored in the EEPROM 83 and determining whether to complete the RA-AKE processing.

Then, upon completing the RA-AKE processing, a content key to be shared between the personal computer 80 and the terminal that has issued the RA-AKE processing request is generated. The generated content key is temporarily stored on the personal computer 80 side, and a content is encrypted by the temporarily-stored content key at a time the content is read out from the large-capacity information storage apparatus 86. The encrypted content is externally output via the I/O interface 87. When the I/O interface 87 has a wireless LAN function, the encrypted content is transmitted to the terminal that has issued the RA-AKE processing request via the wireless LAN.

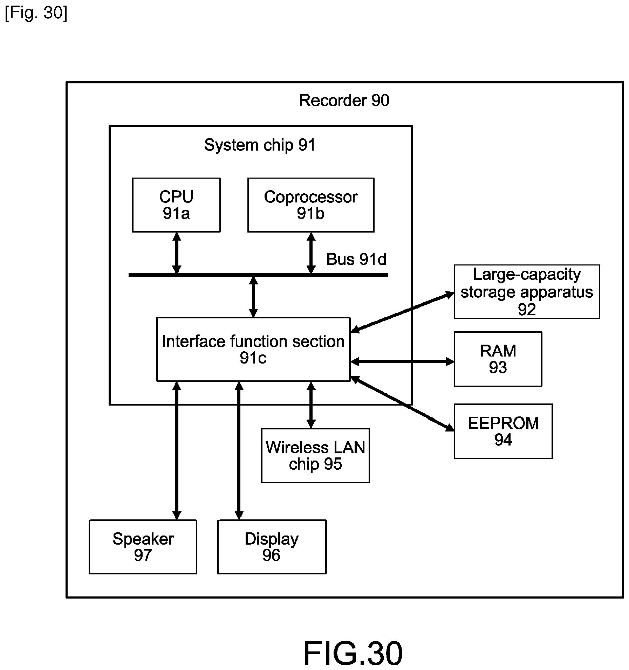

Fig. 30 shows a structural example of a recorder 90 to be applied to the content provision apparatus. The recorder 90 shown in the figure includes a system chip 91, a large-capacity storage apparatus 92, a RAM 93, an EEPROM 94, and a wireless LAN chip 95.

The system chip 91 includes circuit modules such as a CPU 91 a, a coprocessor 91b, and an interface function section 91 c which are mutually connected by a bus 91 d inside the chip.

The CPU 91 a is capable of executing programs stored in the storage apparatus connected thereto via the interface function section 91c.

The coprocessor 91 b is an auxiliary operation apparatus and mainly executes compression and decoding processing of moving images, such as algorithms of H264, VC1, MPEG2, and JPEG. The large-capacity storage apparatus 92 is, for example, an HDD or an SDD and stores contents to be provided to the content utilization apparatus.

Programs to be executed by the CPU 91 a are loaded to the RAM 93 as a main memory. The programs loaded to the RAM 93 are mainly programs that realize functions related to an encryption and decryption of contents, such as a program for executing a DTCP-IP function and a program for executing RA-AKE processing.

The EEPROM 94 is a rewritable nonvolatile storage apparatus and stores setting information and the like. When the recorder 90 operates as the RA-Source, that is, the content provision apparatus, a terminal ID to be the RA-Sink is stored in the EEPROM 94.

On the recorder 90, upon receiving a request to register an RA-Sink (e.g., mobile terminal) as a terminal with which an RA-AKE procedure can be performed from the RA-Sink, the CPU 91 a reads out a program in which AKE processing of the DTCP-IP is described from the RAM 93 and executes an AKE procedure with the RA-Sink.

Upon succeeding in this procedure, the CPU 91 a stores a terminal ID of the RA-Sink in the EEPROM 94 in accordance with the program stored in the RAM 93.

After that, on the recorder 90, the CPU 91 a executes, upon receiving a request for RA-AKE processing, processing of comparing an ID of the terminal that has issued the request and the terminal ID of the RA-Sink stored in the EEPROM 94 and determining whether to complete the RA-AKE processing.

Then, upon completing the RA-AKE processing, a content key to be shared between the recorder 90 and the terminal that has issued the RA-AKE processing request is generated.

The generated content key is temporarily stored on the recorder 90 side, and a content is encrypted by the temporarily-stored content key at a time the content is read out from the large-capacity storage apparatus 92. The encrypted content is transmitted to the terminal that has issued the RA-AKE processing request via the interface function section 91 c and the wireless LAN chip 95.

### [Industrial Applicability]

Heretofore, the present invention has been specifically described while referring to a specific embodiment. It should be understood by those skilled in the art that various modifications, combinations, sub-combinations and alterations may occur depending on design requirements and other factors insofar as they are within the scope of the appended claims or the equivalents thereof.

As an application example of the present invention, there is a communication system in which a client outside a home remotely accesses a server on a home network to which the DTCP-IP is applied to use a content, though not limited thereto. The present invention is similarly applicable to any other content transmission systems for transmitting contents that need to be copyright-protected or protected for other purposes, via a remote access that uses an external network such as a WAN while exceeding limits on a round-trip time (RTT), a hop count (TTL) of an IP router, and the like.

In short, the present invention has been disclosed in the form of exemplifications, and a descriptive content of the specification is not to be interpreted in a limited way. For judging the gist of the present invention, the scope of claims should be taken into account.

The present application contains subject matter related to that disclosed in Japanese Priority Patent Application JP 2009-208687 filed in the Japan Patent Office on September 9, 2009 and Japanese Priority Patent Application JP 2010-117832 filed in the Japan Patent Office on May 21, 2010, the entire content of which is hereby incorporated by reference.

### [Reference Signs List]

- 10: content provision apparatus (RA-Source)
- 11: CPU
- 12: content reception/reproduction section
- 13: communication section
- 14: storage section
- 15: timer
- 20: content utilization apparatus (RA-Sink)
- 21: CPU
- 22: communication section
- 23: content output section
- 24: storage section
- 30, 31: router
- 40, 41: modem
- 50: WAN
- 60: IAS provider
- 70: DDNS service

Various further aspects and features of the present technique are defined in the appended claims. The following numbered clauses define further example embodiments:
1. A conditional access apparatus for selectively generating a signal to permit decryption of encrypted content, the conditional access apparatus comprising:
   a first authorization section configured to:
      receive a command transmitted by a source apparatus;
      transmit to the source apparatus a response to the command; and
      generate a first authorization signal to permit decryption of the content, the first authorization signal being generated upon receipt of an indication signal indicating that a time elapsed
      between transmission of the command by the source apparatus and reception of the response by the source apparatus does not exceed a predetermined round trip time (RTT); and
      a second authorization section configured to generate a second authorization signal to permit decryption of the content, the second authorization signal being generated whenever a non-RTT condition is met.
2. The conditional access apparatus of clause 1, further comprising a registration section configured to transmit a request to register the conditional access apparatus with the source apparatus.
3. The conditional access apparatus of clause 2, wherein the registration section is configured to:
   receive a second command transmitted by the source apparatus; and
   transmit to the source apparatus a second response to the second command.
4. The conditional access apparatus of clause 1, wherein at least one of the first and the second authorization signals includes a content key for decrypting the content.
5. The conditional access apparatus of clause 4, wherein at least one of the first and the second authorization sections is configured to generate the content key based on an exchange key.
6. The conditional access apparatus of clause 5, wherein the first authorization section is configured to generate the content key based on a nonce if:
   the first authorization section receives the indication signal from the source apparatus; and the received indication signal includes the nonce.
7. The conditional access apparatus of clause 1, wherein the predetermined RTT is 7 milliseconds.
8. A source apparatus for selectively generating a signal to permit a conditional access apparatus to decrypt encrypted content, the source apparatus comprising:
   a first authorization section configured to:
      transmit a command to the conditional access apparatus;
      receive from the conditional access apparatus a response to the command; and
         generate a first authorization signal to permit the conditional access apparatus to decrypt the content, the first authorization signal being generated when a time elapsed between transmission of the command and reception of the response does not exceed a predetermined round trip time (RTT); and
         a second authorization section configured to generate a second authorization signal to permit the conditional access apparatus to decrypt the content, the second authorization signal being generated whenever a non-RTT condition is met.
9. The source apparatus of clause 8, further comprising a registration section configured to register at least one conditional access apparatus.
10. The source apparatus of clause 9, wherein the non-RTT condition is met when the conditional access apparatus has been registered with the source apparatus.
11. The source apparatus of clause 9, wherein the non-RTT condition is met when:
   the conditional access apparatus has been registered with the source apparatus; and
   the content has been:
      designated as remotely accessible; or
      not designated as remotely inaccessible.
12. The source apparatus of clause 11, wherein the non-RTT condition is met only when:
   the conditional access apparatus has been registered with the source apparatus; and
   the content has been designated as remotely accessible.
13. The source apparatus of clause 9, wherein the registration section is configured to:
   transmit a second command to the conditional access apparatus; and
   receive from the conditional access apparatus a second response to the second command.
14. The source apparatus of clause 13, wherein the conditional access apparatus is registered with the source apparatus when a second time elapsed between transmission of the second command and reception of the second response does not exceed a second predetermined RTT.
15. The source apparatus of clause 9, wherein only a number of conditional access apparatuses below a threshold value can be registered with the source apparatus at any one time.
16. The source apparatus of clause 8, wherein at least one of the first and the second authorization signals includes an exchange key for generating a content key for decrypting the content.
17. The source apparatus of clause 16, wherein the at least one of the first and the second authorization signals includes a nonce for generating the content key.
18. The source apparatus of clause 8, wherein:
   the first authorization section is configured to transmit the first authorization signal to the conditional access apparatus; and
   the second authorization section is configured to transmit the second authorization signal to the conditional access apparatus.
19. The source apparatus of clause 8, wherein the predetermined RTT is 7 milliseconds.
20. A method for selectively generating a signal with a conditional access apparatus to permit decryption of encrypted content, the method comprising:
   receiving a command transmitted by a source apparatus;
   transmitting to the source apparatus a response to the command;
   upon receipt of an indication signal indicating that a time elapsed between transmission of the command by the source apparatus and reception of the response by the source apparatus does not exceed a predetermined round trip time (RTT), generating a first authorization signal to permit decryption of the content; and
   whenever a non-RTT condition is met, generating a second authorization signal to permit decryption of the content.
21. A method for selectively generating a signal with a source apparatus to permit a conditional access apparatus to decrypt encrypted content, the method comprising:
   transmitting a command to the conditional access apparatus;
   receiving from the conditional access apparatus a response to the command;
   when a time elapsed between transmission of the command and reception of the response does not exceed a predetermined round trip time (RTT), generating a first authorization signal to permit the conditional access apparatus to decrypt the content; and
   whenever a non-RTT condition is met, generating a second authorization signal to permit the conditional access apparatus to decrypt the content.
22. A conditional access apparatus for selectively generating a signal to permit decryption of encrypted content, the conditional access apparatus comprising:
   a memory storing a program; and
   a processor configured to execute the program to cause the conditional access apparatus to perform a method for selectively generating the signal, the method comprising:
      receiving a command transmitted by a source apparatus;
      transmitting to the source apparatus a response to the command;
      upon receipt of an indication signal indicating that a time elapsed between transmission of the command by the source apparatus and reception of the response by the source apparatus does not exceed a predetermined round trip time (RTT), generating a first authorization signal to permit decryption of the content; and
      whenever a non-RTT condition is met, generating a second authorization signal to permit decryption of the content.
23. A source apparatus for selectively generating a signal to permit a conditional access apparatus to decrypt encrypted content, the source apparatus comprising:
   a memory storing a program; and
   a processor configured to execute the program to cause the source apparatus to perform a method for selectively generating the signal, the method comprising:
      transmitting a command to the conditional access apparatus;
      receiving from the conditional access apparatus a response to the command;
      when a time elapsed between transmission of the command and reception of the response does not exceed a predetermined round trip time (RTT), generating a first authorization signal to permit the conditional access apparatus to decrypt the content; and
      whenever a non-RTT condition is met, generating a second authorization signal to permit the conditional access apparatus to decrypt the content.
24. A non-transitory, computer-readable storage medium storing a program that, when executed by a processor, causes a conditional access apparatus to perform a method for selectively generating a signal to permit decryption of encrypted content, the method comprising:
   receiving a command transmitted by a source apparatus;
   transmitting to the source apparatus a response to the command;
   upon receipt of an indication signal indicating that a time elapsed between transmission of the command by the source apparatus and reception of the response by the source apparatus does not exceed a predetermined round trip time (RTT), generating a first authorization signal to permit decryption of the content; and
   whenever a non-RTT condition is met, generating a second authorization signal to permit decryption of the content.
25. A non-transitory, computer-readable storage medium storing a program that, when executed by a processor, causes a source apparatus to perform a method for selectively generating a signal to permit a conditional access apparatus to decrypt encrypted content, the method comprising:
   transmitting a command to the conditional access apparatus;
   receiving from the conditional access apparatus a response to the command;
   when a time elapsed between transmission of the command and reception of the response does not exceed a predetermined round trip time (RTT), generating a first authorization signal to permit the conditional access apparatus to decrypt the content; and
   whenever a non-RTT condition is met, generating a second authorization signal to permit the conditional access apparatus to decrypt the content.

## Claims

1. A method used for controlling content access for both home network and remote access comprising:
receiving a request from a destination device, by a server device, for a remote access operation to a content,
checking, by the server device, whether the destination device is authorized for remote access operations,
checking, by the server device, whether the requested content is presently authorized for the remote access operation,
comparing, by the server device, a predetermined time with a present time of a clock of the server device to check if the predetermined time has passed the present time, wherein, if the present time has not yet passed the predetermined time, the destination device is not allowed for the remote access operation to the requested content, wherein, if the present time has already passed the predetermined time, the destination device is allowed for the remote access operation to the requested content, and
authorizing the destination device for the remote access operation to the requested content as a local access operation when it is determined that the destination device is local device after checking a proximity of the destination device.

2. A method described in claim 1, further comprising changing a status of the remote access operation of the requested content when the present time has already passed the predetermined time.

3. A method described in claim 1, wherein the predetermined time is obtained by adding a predetermined time period to a reference time.

4. A method described in claim 1, further comprising checking whether the request of the remote access operation to the requested content is within a limit of simultaneous access to the content.

5. A method described in claim 1, wherein the remote access operation is MOVE operation of the requested contents.

6. A method described in claim 1, wherein the requested content is accompanied by a copy control information.

7. A device for controlling content access both home network and remote access comprising:
a communication module configured to a request from a destination device for a remote access operation to a content,
a timer, and
a processor configured
to check whether the destination device is authorized for remote access operations,
to check whether the requested content is presently authorized for the remote access operation,
to compare a predetermined time with a present time of the clock of the server device to check if the predetermined time has passed the present time, wherein, if the present time has not yet passed the predetermined time, the destination device is not authorized for the remote access operation to the requested content, wherein, if the present time has already passed the predetermined time, the destination device is authorized for the remote access operation to the requested content, and
to authorize the destination device for the remote access operation to the requested content as a local access operation when it is determined that the destination device is local device after checking a proximity of the destination device.

8. A device described in claim 7, wherein the processor is further configured to change a status of the remote access operation of the requested content when the present time has already passed the predetermined time.

9. A device described in claim 7, wherein the predetermined time is obtained by adding a predetermined time period to a reference time.

10. A device described in claim 7, wherein the processor is further configured to check whether the request of the remote access operation to the requested content is within a limit of simultaneous access to the content.

11. A device described in claim 7, wherein the remote access operation is MOVE operation of the requested contents.

12. A device described in claim 7, wherein the requested content is accompanied by a copy control information.

13. A device described in claim 7, wherein the communication module is enabled for a wireless communication.

14. A content access control system comprising:
a server controlling content access in home network and in remote access and at least one destination device registered to the server,
wherein the server comprises:
a communication module for receiving a request from the destination device for a remote access operation to a content,
a timer,
a processor configured:
to check whether the destination device is authorized for remote access operations,
to check whether the requested content is presently authorized for the remote access operation,
to compare a predetermined time with a present time of the clock of the server device to check if the predetermined time has passed the present time, wherein, if the present time has not yet passed the predetermined time, the destination device is not authorized for the remote access operation to the requested content, wherein, if the present time has already passed the predetermined time, the destination device is authorized for the remote access operation to the requested content, and
to authorize the destination device for the remote access operation to the requested content as a local access operation when it is determined that the destination device is local device after checking a proximity of the destination device.

15. A computer program used for controlling content access for both home network and remote access comprising:
receiving a request from a destination device, by a server device, for a remote access operation to a content,
checking, by the server device, whether the destination device is authorized for remote access operations,
checking, by the server device, whether the requested content is presently authorized for the remote access operation,
comparing, by the server device, a predetermined time with a present time of a clock of the server device to check if the predetermined time has passed the present time, wherein, if the present time has not yet passed the predetermined time, the destination device is not allowed for the remote access operation to the requested content, wherein, if the present time has already passed the predetermined time, the destination device is allowed for the remote access operation to the requested content, and
authorizing the destination device for the remote access operation to the requested content as a local access operation when it is determined that the destination device is local device after checking a proximity of the destination device.
